# EUROPEAN PATENT APPLICATION

(11) **EP 4 755 569 A1**
(43) Date of publication of application: **10.06.2026**
(21) Application number: 24876005.0
(22) Date of filing: 11.05.2024
(51) Int. Cl.: B23K 26/38, G01N 21/89

(54) **DIE CUTTING AND SLITTING SYSTEM, AND VISUAL INSPECTION METHOD FOR DIE CUTTING AND SLITTING**

(30) Priority: 09.10.2023 CN 202311295088
(71) Applicant: Contemporary Amperex Technology Co., Limited, Ningde, Fujian 352100 (CN)
(72) Inventor: WU, Kai, Ningde, Fujian 352100 (CN); TU, Yinhang, Ningde, Fujian 352100 (CN); MA, Yunfei, Ningde, Fujian 352100 (CN); SONG, Shichuang, Ningde, Fujian 352100 (CN)
(74) Representative: Kraus & Lederer PartGmbB
(86) International application number: PCT/CN2024/092662
(87) International publication number: WO 2025/077178

(57) **Abstract**

Provided are a die cutting and slitting system, and a visual inspection method for die cutting and slitting. The die cutting and slitting system comprises: an inner electrode-sheet inspection mechanism (1004), an outer electrode-sheet inspection mechanism (1005), a conveying apparatus and an upper computer, wherein the inner electrode-sheet inspection mechanism (1004) acquires first image information, the outer electrode-sheet inspection mechanism (1005) acquires second image information, and the upper computer performs quality inspection on the basis of the first image information and the second image information. Inspections are respectively performed on inner and outer electrode sheets on the basis of an inner inspection mechanism and an outer inspection mechanism, such that the product quality of electrode sheets is confirmed by means of two paths of electrode sheet images, thereby effectively increasing the yield of a die cutting stage in a cutting process, and effectively screening out electrode sheets with poor quality.

## Description

The present application claims priority to Chinese Patent Application No. 202311295088.X filed on October 9, 2023, the content of which is incorporated herein by reference in its entirety.

### TECHNICAL FIELD

The present application relates to the technical field of battery production, and in particular, to a die cutting and slitting system, and a visual inspection method for die cutting and slitting.

### BACKGROUND

The tab forming process is very important in the production process of batteries. It is a process of processing the positive and negative electrode plates to form a tab. Specifically, a laser beam is used as the main heat source to thermally cut a material to form a tab.

Generally, dimensional deviation correction is performed by controlling the deviation corrector in front of the slitting knife. This control method is not suitable for deviation correction of die cutting device, because the dimensions of the inner and outer electrode plates during die cutting are independently controlled by the inner and outer laser heads.

The above contents are only used to assist in understanding the technical solutions of the present application, and do not represent an admission that the above content constitutes the prior art.

### SUMMARY

A primary objective of the present application is to provide a die cutting and slitting system and a visual inspection method for die cutting and slitting, aiming at solving the technical problem in the prior art that deviation correction cannot be performed for the die cutting device.

In a first aspect, the present application provides a die cutting and slitting system, where the system includes an inner electrode plate inspection mechanism, an outer electrode plate inspection mechanism, a conveying apparatus, and an upper computer; the conveying apparatus is configured to transport an inner electrode plate to pass through the inner electrode plate inspection mechanism, and the conveying apparatus is configured to transport an outer electrode plate to pass through the outer electrode plate inspection mechanism; the inner electrode plate inspection mechanism is configured to acquire first image information; the outer electrode plate inspection mechanism is configured to acquire second image information; the upper computer is configured to perform quality inspection according to the first image information and the second image information.

In this solution, inspections are respectively performed on the inner and outer electrode plates by the inner inspection mechanism and the outer inspection mechanism, such that the product quality of the electrode plates is confirmed according to the electrode plate images from the two paths, thereby ensuring timely deviation correction of the tab forming process. In the one-in-two-out cutting process of the laser cutting process, that is, after die cutting the electrode plate, the electrode plate is divided into two parts, that is, the inner and outer electrode plates, for separate inspection, so as to ensure that the die-cutting width, tab height, tab spacing, and the like of the inner and outer electrode plates meet quality requirements, thereby effectively improving the yield of the die cutting stage in the one-in-two-out cutting process, and effectively screening out electrode plates with poor quality.

In some embodiments, the system further includes an electrode plate processing mechanism; the electrode plate processing mechanism is configured to process an electrode plate into an inner electrode plate and an outer electrode plate, and the inner electrode plate and the outer electrode plate are transported by the conveying apparatus; the upper computer is further configured to determine an image inspection result according to the first image information and the second image information, and send the image inspection result to the electrode plate processing mechanism; the electrode plate processing mechanism is configured to adjust the inner electrode plate and/or the outer electrode plate according to the image inspection result.

In process of the die cutting processing, there may be a situation that the dimension of the electrode plate after the electrode plate processing does not meet the requirements. Therefore, according to the image information of the inner electrode plate and the image information of the outer electrode plate, all the dimension information of the electrode plate in the die cutting stage can be effectively determined, and the quality of the die cutting stage can be further determined through the dimension information. When there is an electrode plate with a dimension that does not meet the requirements, the information can be fed back to the processing station and the processing station can be adjusted to avoid the occurrence of batches of defective products, thereby improving the yield of the die cutting process.

In some embodiments, the inner electrode plate inspection mechanism includes one or more of an inner electrode plate reverse side visual inspection mechanism, an inner electrode plate backlight visual inspection mechanism, and an inner electrode plate front side visual inspection mechanism. The inner electrode plate reverse side visual inspection mechanism is configured to inspect a reverse side image of the inner electrode plate; the inner electrode plate backlight visual inspection mechanism is configured to inspect a backlight image of the inner electrode plate; the inner electrode plate front side visual inspection mechanism is configured to inspect a front side image of the inner electrode plate. The upper computer is further configured to determine the first image information according to one or more of the reverse side image of the inner electrode plate, the backlight image of the inner electrode plate, and the front side image of the inner electrode plate.

In the process of electrode plate inspection, relying solely on images captured by a single station can easily lead to misjudgments, and the image information collected from one angle may not be comprehensive. Therefore, by means of disposing electrode plate inspection mechanisms in multiple orientations, images of the inner electrode plate can be collected from multiple angles, allowing the dimension of the electrode plate to be determined according to multiple sets of image information, thereby improving the accuracy of quality inspection.

In some embodiments, the outer electrode plate inspection mechanism includes one or more of an outer electrode plate reverse side visual inspection mechanism, an outer electrode plate backlight visual inspection mechanism, and an outer electrode plate front side visual inspection mechanism. The outer electrode plate reverse side visual inspection mechanism is configured to inspect a reverse side image of the outer electrode plate; the outer electrode plate backlight visual inspection mechanism is configured to inspect a backlight image of the outer electrode plate; the outer electrode plate front side visual inspection mechanism is configured to inspect a front side image of the outer electrode plate. The upper computer is further configured to determine the second image information according to one or more of the reverse side image of the outer electrode plate, the backlight image of the outer electrode plate, and the front side image of the outer electrode plate.

In the process of electrode plate inspection, relying solely on images captured by a single station can easily lead to misjudgments, and the image information collected from one angle may not be comprehensive. Therefore, by means of disposing electrode plate inspection mechanisms in multiple orientations, images of the outer electrode plate can be collected from multiple angles, allowing the dimension of the electrode plate to be determined according to multiple sets of image information, thereby improving the accuracy of quality inspection.

In some embodiments, the inner electrode plate inspection mechanism includes an inner electrode plate reverse side visual inspection mechanism. The inner electrode plate reverse side visual inspection mechanism includes a first inner electrode plate image acquisition apparatus and a first inner electrode plate inspection light source. The first inner electrode plate image acquisition apparatus directly faces a reverse side of the inner electrode plate, and the first inner electrode plate inspection light source directly faces the reverse side of the inner electrode plate. The inner electrode plate reverse side visual inspection mechanism is configured to inspect a reverse side image of the inner electrode plate.

By means of providing the reverse side visual inspection mechanism, and disposing both the image acquisition apparatus and the light source on the reverse side of the electrode plate, the reverse side image of the electrode plate can be clearly inspected. By means of acquiring the reverse side image, the diversity of inspection angles of the electrode plate is increased, and the inspection accuracy of the electrode plate is improved.

In some embodiments, the inner electrode plate inspection mechanism includes an inner electrode plate backlight visual inspection mechanism. The inner electrode plate backlight visual inspection mechanism includes a second inner electrode plate image acquisition apparatus and a second inner electrode plate inspection light source. The second inner electrode plate image acquisition apparatus directly faces a front side of the inner electrode plate, and the second inner electrode plate inspection light source directly faces a reverse side of the inner electrode plate. The inner electrode plate backlight visual inspection mechanism is configured to inspect a backlight image of the inner electrode plate.

By means of providing the backlight visual inspection mechanism, and disposing both the image acquisition apparatus and the light source on both sides of the electrode plate, the backlight image of the electrode plate can be clearly inspected. By means of acquiring the backlight image, the diversity of inspection angles of the electrode plate is increased, and the inspection accuracy of the electrode plate is improved.

In some embodiments, the inner electrode plate inspection mechanism includes an inner electrode plate front side visual inspection mechanism. The inner electrode plate front side visual inspection mechanism includes a third inner electrode plate image acquisition apparatus and a third inner electrode plate inspection light source. The third inner electrode plate image acquisition apparatus directly faces a front side of the inner electrode plate, and the third inner electrode plate inspection light source directly faces the front side of the inner electrode plate. The inner electrode plate front side visual inspection mechanism is configured to detect a front side image of the inner electrode plate.

By means of providing the front side visual inspection mechanism, and disposing both the image acquisition apparatus and the light source on the front side of the electrode plate, the front side image of the electrode plate can be clearly inspected. By means of acquiring the front side image, the diversity of inspection angles of the electrode plate is increased, and the inspection accuracy of the electrode plate is improved.

In some embodiments, the outer electrode plate inspection mechanism includes an outer electrode plate reverse side visual inspection mechanism. The outer electrode plate reverse side visual inspection mechanism includes a first outer electrode plate image acquisition apparatus and a first outer electrode plate inspection light source. The first outer electrode plate image acquisition apparatus directly faces a reverse side of the outer electrode plate, and the first outer electrode plate inspection light source directly faces the reverse side of the outer electrode plate. The outer electrode plate reverse side visual inspection mechanism is configured to inspect a reverse side image of the outer electrode plate. By means of providing the reverse side visual inspection mechanism, and disposing both the image acquisition apparatus and the light source on the reverse side of the electrode plate, the reverse side image of the electrode plate can be clearly inspected. By means of acquiring the reverse side image, the diversity of inspection angles of the electrode plate is increased, and the inspection accuracy of the electrode plate is improved.

In some embodiments, the outer electrode plate inspection mechanism includes an outer electrode plate backlight visual inspection mechanism. The outer electrode plate backlight visual inspection mechanism includes a second outer electrode plate image acquisition apparatus and a second outer electrode plate inspection light source. The second outer electrode plate image acquisition apparatus directly faces a front side of the outer electrode plate, and the second outer electrode plate inspection light source directly faces a reverse side of the outer electrode plate. The outer electrode plate backlight visual inspection mechanism is configured to inspect a backlight image of the outer electrode plate.

By means of providing the backlight visual inspection mechanism, and disposing both the image acquisition apparatus and the light source on both sides of the electrode plate, the backlight image of the electrode plate can be clearly inspected. By means of acquiring the backlight image, the diversity of inspection angles of the electrode plate is increased, and the inspection accuracy of the electrode plate is improved.

In some embodiments, the outer electrode plate inspection mechanism includes an outer electrode plate front side visual inspection mechanism. The outer electrode plate front side visual inspection mechanism includes a third outer electrode plate image acquisition apparatus and a third outer electrode plate inspection light source. The third outer electrode plate image acquisition apparatus directly faces a front side of the outer electrode plate, and the third outer electrode plate inspection light source directly faces the front side of the outer electrode plate. The outer electrode plate front side visual inspection mechanism is configured to inspect a front side image of the outer electrode plate.

By means of providing the front side visual inspection mechanism, and disposing both the image acquisition apparatus and the light source on the front side of the electrode plate, the front side image of the electrode plate can be clearly inspected. By means of acquiring the front side image, the diversity of inspection angles of the electrode plate is increased, and the inspection accuracy of the electrode plate is improved.

In a second aspect, in order to achieve the above objective, the present application further proposes a control system for a die cutting and slitting system, where the method is applied to the die cutting and slitting system. The system includes an inner electrode plate inspection mechanism, an outer electrode plate inspection mechanism, an upper computer, and a conveying apparatus; controls the conveying apparatus to transport an inner electrode plate to pass through the inner electrode plate inspection mechanism; controls the conveying apparatus to transport an outer electrode plate to pass through the outer electrode plate inspection mechanism; controls the inner electrode plate inspection mechanism to acquire first image information of the inner electrode plate; controls the outer electrode plate inspection mechanism to acquire second image information of the outer electrode plate; sends the first image information and the second image information to the upper computer, such that the upper computer performs quality inspection according to the first image information and the second image information, to obtain an inspection result.

In this solution, inspections are respectively performed on the inner and outer electrode plates by the inner inspection mechanism and the outer inspection mechanism, such that the product quality of the electrode plates is confirmed according to the electrode plate images from the two paths, thereby ensuring timely deviation correction of the tab forming process. In the one-in-two-out cutting process of the laser cutting process, that is, after die cutting the electrode plate, the electrode plate is divided into two parts, that is, the inner and outer electrode plates, for separate inspection, so as to ensure that the die-cutting width, tab height, tab spacing, and the like of the inner and outer electrode plates meet quality requirements, thereby effectively improving the yield of the die cutting stage in the one-in-two-out cutting process, and effectively screening out electrode plates with poor quality.

In some embodiments, the control system for the die cutting and slitting system further includes an electrode plate processing mechanism; acquires the inspection result sent by the upper computer; controls the electrode plate processing mechanism to perform electrode plate processing according to the inspection result.

In process of the die cutting processing, there may be a situation that the dimension of the electrode plate after the electrode plate processing does not meet the requirements. Therefore, according to the image information of the inner electrode plate and the image information of the outer electrode plate, all the dimension information of the electrode plate in the die cutting stage can be effectively determined, and the quality of the die cutting stage can be further determined through the dimension information. When there is an electrode plate with a dimension that does not meet the requirements, the information can be fed back to the processing station and the processing station can be adjusted to avoid the occurrence of batches of defective products, thereby improving the yield of the die cutting process.

In a third aspect, in order to achieve the above objective, the present application further proposes a visual inspection method for die cutting and slitting, where the method is applied to the die cutting and slitting system. The system includes an inner electrode plate inspection mechanism, an outer electrode plate inspection mechanism, a conveying apparatus, and an upper computer. The conveying apparatus is configured to transport an inner electrode plate to pass through the inner electrode plate inspection mechanism, and the conveying apparatus is configured to transport an outer electrode plate to pass through the outer electrode plate inspection mechanism. The visual inspection method for die cutting and slitting includes: the upper computer being configured to acquire first image information and second image information; performing quality inspection according to the first image information and the second image information, where the first image information is an image acquired by the inner electrode plate inspection mechanism, and the second image information is an image acquired by the outer electrode plate inspection mechanism.

In this solution, inspections are respectively performed on the inner and outer electrode plates by the inner inspection mechanism and the outer inspection mechanism, such that the product quality of the electrode plates is confirmed according to the electrode plate images from the two paths, thereby ensuring timely deviation correction of the tab forming process. In the one-in-two-out cutting process of the laser cutting process, that is, after die cutting the electrode plate, the electrode plate is divided into two parts, that is, the inner and outer electrode plates, for separate inspection, so as to ensure that the die-cutting width, tab height, tab spacing, and the like of the inner and outer electrode plates meet quality requirements, thereby effectively improving the yield of the die cutting stage in the one-in-two-out cutting process, and effectively screening out electrode plates with poor quality.

In some embodiments, the die cutting and slitting system further includes an electrode plate processing mechanism. The electrode plate processing mechanism is configured to process the inner electrode plate and the outer electrode plate. The performing quality inspection according to the first image information and the second image information further includes: determining first electrode plate dimension information of the inner electrode plate according to the first image information, and determining second electrode plate dimension information of the outer electrode plate according to the second image information; after the performing quality inspection according to the first image information and the second image information, the method further includes: adjusting the electrode plate processing mechanism according to the first electrode plate dimension information and/or the second electrode plate dimension information.

In process of the die cutting processing, there may be a situation that the dimension of the electrode plate after the electrode plate processing does not meet the requirements. Therefore, according to the image information of the inner electrode plate and the image information of the outer electrode plate, all the dimension information of the electrode plate in the die cutting stage can be effectively determined, and the quality of the die cutting stage can be further determined through the dimension information. When there is an electrode plate with a dimension that does not meet the requirements, the information can be fed back to the processing station and the processing station can be adjusted to avoid the occurrence of batches of defective products, thereby improving the yield of the die cutting process.

In some embodiments, a plurality of the inner electrode plate inspection mechanisms are provided. The inner electrode plate inspection mechanisms each include an inner electrode plate image acquisition apparatus and an inner electrode plate inspection light source. The relative positions of the inner electrode plate image acquisition apparatus and the inner electrode plate inspection light source in each of the inner electrode plate inspection mechanisms to the inner electrode plate are different. The determining the first electrode plate dimension information of the inner electrode plate according to the first image information includes: determining the first electrode plate dimension information of the inner electrode plate according to the first image information corresponding to each of the inner electrode plate inspection mechanisms.

In the process of electrode plate inspection, relying solely on images captured by a single station can easily lead to misjudgments, and the image information collected from one angle may not be comprehensive. Therefore, by means of disposing electrode plate inspection mechanisms in multiple orientations, images of the inner electrode plate can be collected from multiple angles, allowing the dimension of the electrode plate to be determined according to multiple sets of image information, thereby improving the accuracy of quality inspection.

In some embodiments, a plurality of the outer electrode plate inspection mechanisms are provided. The outer electrode plate inspection mechanisms each include an outer electrode plate image acquisition apparatus and an outer electrode plate inspection light source. The relative positions of the outer electrode plate image acquisition apparatus and the outer electrode plate inspection light source in each of the outer electrode plate inspection mechanisms to the outer electrode plate are different. The determining the second electrode plate dimension information of the outer electrode plate according to the second image information includes: determining the second electrode plate dimension information of the outer electrode plate according to the second image information corresponding to each of the outer electrode plate inspection mechanisms.

In the process of electrode plate inspection, relying solely on images captured by a single station can easily lead to misjudgments, and the image information collected from one angle may not be comprehensive. Therefore, by means of disposing electrode plate inspection mechanisms in multiple orientations, images of the outer electrode plate can be collected from multiple angles, allowing the dimension of the electrode plate to be determined according to multiple sets of image information, thereby improving the accuracy of quality inspection.

In some embodiments, the inner electrode plate inspection mechanism includes one or more of an inner electrode plate reverse side visual inspection mechanism, an inner electrode plate backlight visual inspection mechanism, and an inner electrode plate front side visual inspection mechanism. The inner electrode plate reverse side visual inspection mechanism is configured to inspect a reverse side image of the inner electrode plate; the inner electrode plate backlight visual inspection mechanism is configured to inspect a backlight image of the inner electrode plate; the inner electrode plate front side visual inspection mechanism is configured to inspect a front side image of the inner electrode plate. The determining the first electrode plate dimension information of the inner electrode plate according to the first image information includes: determining the first electrode plate dimension information of the inner electrode plate according to one or more of the reverse side image of the inner electrode plate, the backlight image of the inner electrode plate, and the front side image of the inner electrode plate.

By means of acquiring the front side image, the backlight image and the reverse side image of the inner electrode plate, all the information of the inner electrode plate can be determined almost without a dead angle. This is because if an image is acquired at a random angle in the actual inspection process, the image quality may affected by reflection, blur, smear, etc., but this situation can be effectively avoided by the front side image, the backlight image and the reverse side image, and the dimension can be determined in time when there are problems in the other two methods. Further, image acquisition is always prone to errors due to the limitation of environment. By means of performing comprehensive calculations using images acquired from three different angles, errors can be effectively reduced, thereby improving the accuracy of the first electrode plate dimension information.

In some embodiments, the outer electrode plate inspection mechanism includes one or more of an outer electrode plate reverse side visual inspection mechanism, an outer electrode plate backlight visual inspection mechanism, and an outer electrode plate front side visual inspection mechanism. The outer electrode plate reverse side visual inspection mechanism is configured to inspect a reverse side image of the outer electrode plate; the outer electrode plate backlight visual inspection mechanism is configured to inspect a backlight image of the outer electrode plate; the outer electrode plate front side visual inspection mechanism is configured to inspect a front side image of the outer electrode plate; the determining the second electrode plate dimension information of the outer electrode plate according to the second image information includes: determining the second electrode plate dimension information of the outer electrode plate according to one or more of the reverse side image of the outer electrode plate, the backlight image of the outer electrode plate, and the front side image of the outer electrode plate.

By means of acquiring the front side image, the backlight image and the reverse side image of the outer electrode plate, all the information of the inner electrode plate can be determined almost without a dead angle. This is because if an image is acquired at a random angle in the actual inspection process, the image quality may affected by reflection, blur, smear, etc., but this situation can be effectively avoided by the front side image, the backlight image and the reverse side image, and the dimension can be determined in time when there are problems in the other two methods. Further, image acquisition is always prone to errors due to the limitation of environment. By means of performing comprehensive calculations using images acquired from three different angles, errors can be effectively reduced, thereby improving the accuracy of the second electrode plate dimension information.

In some embodiments, the determining the first electrode plate dimension information of the inner electrode plate according to the first image information includes: determining an electrode width of the inner electrode plate according to the first image information; comparing the electrode width of the inner electrode plate with a preset standard electrode width interval to determine the first electrode plate dimension information.

Since the first electrode plate dimension information is information required to be used for adjusting the processing of the electrode plate, the first electrode plate dimension information needs to provide a basis for whether the inner electrode plate meets the standard dimension, and how much the electrode plate dimension exceeds the standard dimension when it does not meet the standard dimension. Therefore, by means of comparing the electrode width of the inner electrode plate with the preset standard electrode width interval to determine whether the electrode width of the inner electrode plate meets the standard dimension or how much the electrode width of the inner electrode plate exceeds the standard dimension when it does not meet the standard dimension, the efficiency of the deviation correction of the processing station is improved.

In some embodiments, the determining the electrode width of the inner electrode plate according to the first image information includes: determining a plurality of sampled image frames according to the first image information; determining an electrode width corresponding to each of the sampled image frames according to each of the sampled image frames; determining the electrode width of the inner electrode plate according to the electrode width corresponding to each of the sampled image frames.

In the actual inspection process, relying solely on a single image to determine dimensions is likely to result in errors. Therefore, a plurality of sampled image frames can be determined, and the electrode width is comprehensively determined by a plurality of frames of images, which improves the accuracy of determining the electrode width of the inner electrode plate.

In some embodiments, the determining the electrode width corresponding to each of the sampled image frames according to each of the sampled image frames includes: determining a plurality of sampling points according to the sampled image frames; determining a sampling electrode width value corresponding to each of the sampling points according to the sampled image frames; determining the electrode widths corresponding to the sampled image frames according to each of the sampling electrode width values.

In order to avoid a relatively large error in the final inspection result caused by a large error of a certain frame image, it is necessary to stabilize the electrode width value inspected in each frame of image. Therefore, a plurality of sampling points can be determined in the sampled image frame for comprehensive calculation, which improves the accuracy of the electrode width value inspected in each frame image.

In some embodiments, the determining the electrode width of the inner electrode plate according to the first image information includes: determining a backlight image of the inner electrode plate according to the first image information; and determining the electrode width of the inner electrode plate according to the backlight image of the inner electrode plate.

Generally, the backlight image requires the light emitted by the light source to pass through the electrode plate, and the maximum contour of the electrode plate is inspected. For example, when the image is beveled or one side is cut crooked, whether the cutting error occurs on the front side or the back side, it can be captured through the backlight image. Therefore, it will be more comprehensive to determine the electrode width of the inner electrode plate through the backlight image, which improves the accuracy of inspecting the electrode width of the inner electrode plate.

In some embodiments, the die cutting and slitting system further includes a first marking apparatus and a second marking apparatus. When the first electrode plate dimension information does not meet the first preset dimension information, the first marking apparatus is controlled to mark the inner electrode plate; when the second electrode plate dimension information does not meet the second preset dimension information, the second marking apparatus is controlled to mark the outer electrode plate.

The first marking apparatus and the second marking apparatus can mark the unqualified electrode plates in time, for identification by subsequent process stages. The marked electrode plates are collected into the scrap machine, thereby improving the efficiency of the waste recycling and increasing the yield of the die cutting process.

In some embodiments, the performing quality inspection according to the first image information and the second image information further includes: determining first electrode plate defect information of the inner electrode plate according to the first image information; determining second electrode plate defect information of the outer electrode plate according to the second image information; and generating alarm information when the first electrode plate defect information indicates that a defect is present or the second electrode plate defect information indicates that a defect is present.

Since there are problems such as cutting defects in the production process of the electrode plate, the defects of the electrode plate can be further detected based on the image information collected by the inner electrode plate inspection mechanism and the outer electrode plate inspection mechanism, so as to improve the quality of the electrode plate and reduce the occurrence of defective products.

In some embodiments, the inner electrode plate inspection mechanism includes an inner electrode plate reverse side visual inspection mechanism, an inner electrode plate backlight visual inspection mechanism, and an inner electrode plate front side visual inspection mechanism. The determining the first electrode plate defect information of the inner electrode plate according to the first image information includes: determining a reverse side image of the inner electrode plate, a backlight image of the inner electrode plate, and a front side image of the inner electrode plate according to the first image information; determining a reverse side defect condition of the inner electrode plate according to the reverse side image of the inner electrode plate; determining a front side defect condition of the inner electrode plate according to the front side image of the inner electrode plate; determining an internal defect condition of the inner electrode plate according to the backlight image of the inner electrode plate; determining the first electrode plate defect information of the inner electrode plate according to the front side defect condition, the reverse side defect condition, and the internal defect condition.

The defect information generally includes the information of electrode plate defects such as burrs, cracks, and missing corners. Therefore, inspection from only one direction fails to achieve comprehensive inspection. The defects on the reverse and front sides can be effectively inspected by the reverse side image and the front side image, and the defects inside the electrode plate can be determined by the backlight image, thereby comprehensively inspecting the defects of the electrode plate and improving the comprehensiveness of the defects inspection of the first electrode plate.

In some embodiments, the outer electrode plate inspection mechanism includes an outer electrode plate reverse side visual inspection mechanism, an outer electrode plate backlight visual inspection mechanism, and an outer electrode plate front side visual inspection mechanism. The determining the second electrode plate defect information of the outer electrode plate according to the second image information includes: determining a reverse side image of the outer electrode plate, a backlight image of the outer electrode plate, and a front side image of the outer electrode plate according to the second image information; determining a reverse side defect condition of the outer electrode plate according to the reverse side image of the outer electrode plate; determining a front side defect condition of the outer electrode plate according to the front side image of the outer electrode plate; determining an internal defect condition of the outer electrode plate according to the backlight image of the outer electrode plate; determining the second electrode plate defect information of the outer electrode plate according to the front side defect condition, the reverse side defect condition, and the internal defect condition.

The defect information generally includes the information of electrode plate defects such as burrs, cracks, and missing corners. Therefore, inspection from only one direction fails to achieve comprehensive inspection. The defects on the reverse and front sides can be effectively inspected by the reverse side image and the front side image, and the defects inside the electrode plate can be determined by the backlight image, thereby comprehensively inspecting the defects of the electrode plate and improving the comprehensiveness of the defects inspection of the second electrode plate.

The above description is only an overview of the technical solutions of the present application. To more clearly understand the technical means of the present application to enable implementation in accordance with the content of the specification and to make the above and other objectives, features, and advantages of the present application more obvious and easy to understand, the detailed description of the present application is provided below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present application. Furthermore, the same reference numerals in all the drawings denote identical components. In the drawings:
FIG. 1 is a schematic flow diagram according to some embodiments of the present application;
FIG. 2 is a schematic structural diagram of a production line according to some embodiments of the present application;
FIG. 3 is a schematic diagram of an electrode plate according to some embodiments of the present application;
FIG. 4 is a schematic diagram of a single-side electrode plate according to some embodiments of the present application;
FIG. 5 is a schematic structural diagram of production line devices according to some embodiments of the present application; and
FIG. 6 is a schematic flow diagram of deviation correction of a tab forming process according to some embodiments of the present application.

Reference numerals in the detailed description are as follows:
A: tab forming region
B: inner electrode plate reverse side visual inspection mechanism
C: inner electrode plate backlight visual inspection mechanism
D: inner electrode plate front side visual inspection mechanism
E: outer electrode plate reverse side visual inspection mechanism
F: outer electrode plate backlight visual inspection mechanism
H: outer electrode plate front side visual inspection mechanism
1: inner laser head
2: outer laser head
3: roller
25: inner electrode plate reverse side image acquisition apparatus
26: inner electrode plate reverse side light source
27: inner electrode plate backlight image acquisition apparatus
28: inner electrode plate backlight light source
29: inner electrode plate front side image acquisition apparatus
30: inner electrode plate front side light source
31: outer electrode plate reverse side image acquisition apparatus
32: outer electrode plate reverse side light source
33: outer electrode plate backlight image acquisition apparatus
34: outer electrode plate backlight light source
35: outer electrode plate front side image acquisition apparatus
36: outer electrode plate front side light source
37: inner marking machine
38: outer marking machine
1001: electrode plate processing mechanism
1002: inner conveying apparatus
1003: outer conveying apparatus
1004: inner electrode plate inspection mechanism
1005: outer electrode plate inspection mechanism

The realization of the objectives, the functional features, and the advantages of the present application will be further described with reference to the drawings.

### DETAILED DESCRIPTION

Embodiments of the technical solutions of the present application will be described in detail below with reference to the drawings. The following embodiments are only used to illustrate the technical solutions of the present application more clearly, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application can be interpreted according to specific conditions.

The embodiments of the present application are applied to the electrode plate tab forming process, and are mainly used for a processing type of N cutting process. Specifically, the tabs are cut and formed by a laser cutting platform; during the cutting process, the inner and outer laser heads are independently controlled. Then, the electrode plate is slit into an inner electrode plate and an outer electrode plate through a slitting process. In order to perform deviation correction on the process flow as much as possible in this process and complete the adjustment of the process in time, according to the embodiments of the present application, image acquisition apparatuses are disposed on the inner electrode plate production line and the outer electrode plate production line, respectively, to comprehensively detect the processing quality of the electrode plates based on images of the inner electrode plate and the outer electrode plate. Furthermore, a CCD visual inspection system is used to perform product quality monitoring, closed-loop dimensional deviation correction, appearance defect inspection and alarming, shutdown, and marking for the electrode plates produced by the S-type staggered die-cutting device. In the absence of a CCD monitoring system, the S-type die cutting and slitting device only adjusts the centering of the material strip. This adjustment method cannot obtain feedback on the dimensions of the electrode plates after slitting, and real-time adjustments cannot be made. When deviations occur, timely correction cannot be performed, which may easily lead to large-scale scrapping of products. Therefore, according to the embodiments of the present application, by means of performing inspection on the inner and outer electrode plates after slitting, an effective closed-loop deviation correction is achieved, which avoids the inability to make real-time adjustments, and further avoids the situation of large-scale product scrapping caused by inability to perform timely correction.

The battery cell disclosed in the embodiments of the present application can be used in electric devices that use batteries as the power source or in various energy storage systems that use batteries as the energy storage element. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

In some embodiments, a die cutting and slitting system includes an inner electrode plate inspection mechanism 1004, an outer electrode plate inspection mechanism 1005, a conveying apparatus, and an upper computer; the conveying apparatus is configured to transport an inner electrode plate to pass through the inner electrode plate inspection mechanism 1004, and the conveying apparatus is configured to transport an outer electrode plate to pass through the outer electrode plate inspection mechanism 1005; the inner electrode plate inspection mechanism 1004 is configured to acquire first image information; the outer electrode plate inspection mechanism 1005 is configured to acquire second image information; the upper computer is configured to perform quality inspection according to the first image information and the second image information.

The die cutting device may be a laser tab forming machine or other tab forming devices. This embodiment only takes a one-in-two-out electrode plate forming process as an example for illustration. The main functions may include two parts: tab forming and electrode plate slitting. The tab forming is used to process an electrode plate into a shape corresponding to a tab, and the electrode plate slitting is used to slit the electrode plate after the tab forming into an inner electrode plate and an outer electrode plate.

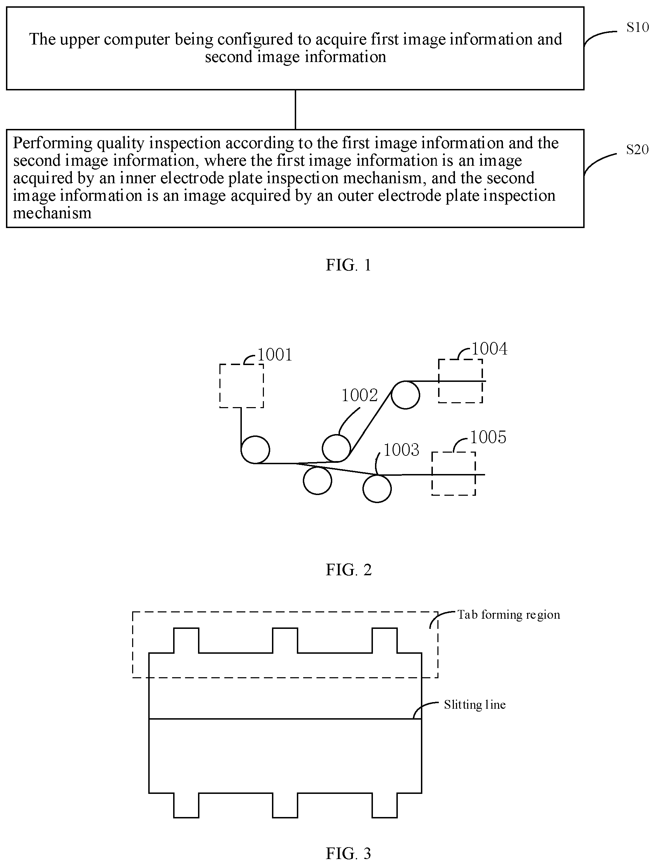

Referring to FIG. 2, the inner electrode plate inspection mechanism 1004, the outer electrode plate inspection mechanism 1005, and the conveying apparatus are arranged in the production line. The inner electrode plate inspection mechanism 1004 and the outer electrode plate inspection mechanism 1005 are configured to inspect the inner electrode plate and the outer electrode plate, respectively, and the inspection contents may include dimensions, appearance, shapes, defects, and the like of the electrode plates. Therefore, the inner electrode plate inspection mechanism 1004 and the outer electrode plate inspection mechanism 1005 may each be provided with an image detection apparatus to acquire image information of the inner electrode plate and the outer electrode plate, and then make judgments on the dimensions, appearance, shapes, defects, and the like of the electrode plates according to the image information. The first image information refers to image information of the outer electrode plate conveyed through an outer conveying apparatus 1003, and the second image information refers to image information of the inner electrode plate conveyed through an inner conveying apparatus 1002. The conveying apparatus may be a roller mechanism that can transport the electrode plates to different positions through rollers.

There may be many production parameters that need to be verified in the electrode plate tab forming process, for example, cutting specifications, which may include die-cutting width, tab height, tab spacing, tab width, marking position, slitting width, heat-affected zone, burrs, scratches, cracks, and the like. Therefore, it is necessary to analyze the first image information and the second image information to complete quality inspection of the inner electrode plate and the outer electrode plate.

Specifically, the quality inspection process includes identifying the position of a defective electrode plate through image information combined with image identification, object inspection, and other technologies to determine whether there are quality problems in the image, e.g., substandard dimensions, defects such as burrs and cracks, and the like.

In FIG. 2, the conveying apparatus is divided into an outer conveying apparatus 1003 and an inner conveying apparatus 1002, which transport materials to the next process stage, respectively. An inner electrode plate inspection mechanism 1004 and an outer electrode plate inspection mechanism 1005 are provided in the conveying path, and these mechanisms collect image information of the materials in the conveying process.

In this solution, inspections are respectively performed on the inner and outer electrode plates by the inner inspection mechanism and the outer inspection mechanism, such that the product quality of the electrode plates is confirmed according to the electrode plate images from the two paths, thereby ensuring timely deviation correction of the tab forming process. In the one-in-two-out cutting process of the laser cutting process, that is, after die cutting the electrode plate, the electrode plate is divided into two parts, that is, the inner and outer electrode plates, for separate inspection, so as to ensure that the die-cutting width, tab height, tab spacing, and the like of the inner and outer electrode plates meet quality requirements, thereby effectively improving the yield of the die cutting stage in the one-in-two-out cutting process, and effectively screening out electrode plates with poor quality.

In some embodiments, the system further includes an electrode plate processing mechanism 1001. The electrode plate processing mechanism 1001 is configured to process an electrode plate into an inner electrode plate and an outer electrode plate, and the inner electrode plate and the outer electrode plate are transported by the conveying apparatus. The upper computer is further configured to determine an image inspection result according to the first image information and the second image information, and send the image inspection result to the electrode plate processing mechanism 1001. The electrode plate processing mechanism 1001 is configured to adjust the inner electrode plate and/or the outer electrode plate according to the image inspection result.

On the basis of quality inspection, further deviation correction of the electrode plate can be performed. As shown in FIG. 1, the electrode plate processing mechanism 1001 is configured to process the electrode plate. Specifically, the electrode plate processing mechanism 1001 can first die-cut the electrode plate, and then slit the electrode plate into an inner electrode plate and an outer electrode plate, and finally obtain formed tabs on the substrate. For example, assuming that a laser tab forming method is used in the die-cutting process, then at the processing station, as shown in FIG. 3, the electrode plate is cut by a laser device in a tab forming region, where an incoming electrode plate is cut to obtain tabs, thereby completing the tab forming. The electrode plate is then divided into two along the slitting line by a slitting apparatus to obtain an outer electrode plate and an inner electrode plate. The outer electrode plate and the inner electrode plate are then sent to various inspection mechanisms by a conveying apparatus for quality inspection.

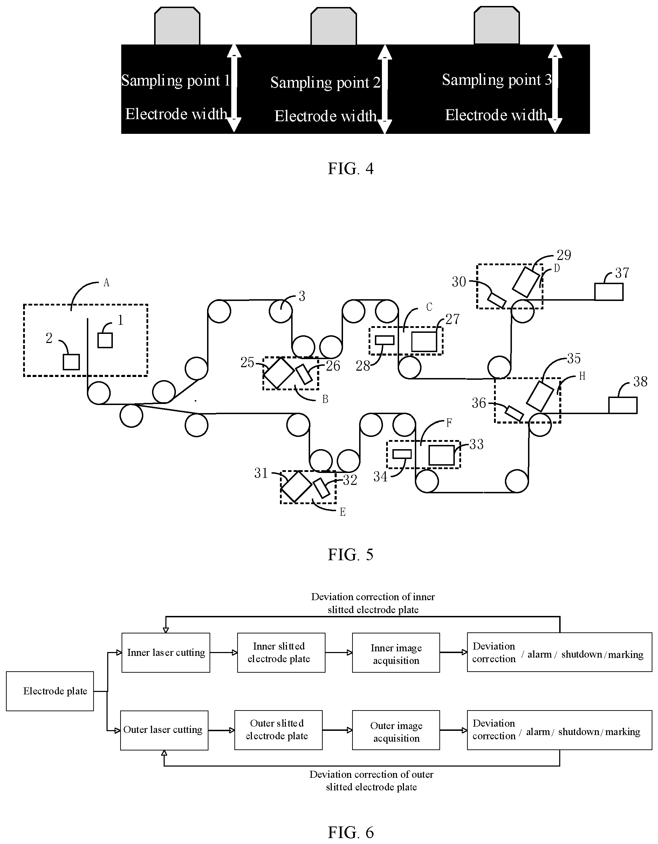

Furthermore, the inner electrode plate is one of the electrode plates after slitting. As shown in FIG. 4, the electrode plate in FIG. 4 shows three tabs. The inner electrode plate and the outer electrode plate are generally the same in shape. If the slitting apparatus performs symmetrical cutting along the slitting line, the outer electrode plate and the inner electrode plate are almost completely symmetrical. Currently, according to process requirements, the two electrode plates may not be cut symmetrically, that is, the slitting line is closer to the tabs on one side. This embodiment does not limit this and only takes a symmetrical cutting method as an example for illustration. The first electrode plate dimension information of the inner electrode plate is determined according to the first image information, and the first electrode plate dimension information includes dimensions of various positions of the inner electrode plate, for example, an electrode plate width, a tab height, a tab width, and the like of the inner electrode plate.

The second electrode plate dimension information of the outer electrode plate is determined according to the second image information, and the second electrode plate dimension information refers to dimensions of various positions of the outer electrode plate, for example, an electrode plate width, a tab height, tab spacing, a tab width, and the like of the outer electrode plate.

After acquiring the dimension information, the dimension information can be compared with a process-required dimension, an electrode plate or tab with a dimension problem can be identified and the difference between the electrode plate or tab and the process-required dimension can be determined. The processing station is then adjusted, such that the same problem will not occur in the subsequent electrode plates and tabs, thereby completing the deviation correction of the die-cutting process. For example, when a problem with the tab spacing is inspected, the tab spacing is compared with a process-desired tab spacing to obtain a tab spacing deviation value. The laser module is then adjusted according to the tab spacing deviation value to ensure that the subsequent tab spacing is accurate. For another example, assuming that there is a problem with the electrode width, whether the problem lies in the slitting process or the die-cutting process can be determined by combining the tab height and the electrode width. If there is no problem with the tab height but there is a problem with the electrode width, the slitting position of the slitting device can be adjusted.

Specifically, referring to FIG. 6, an incoming electrode plate passes through a laser chamber, where an inner laser cuts the plate to form inner tabs, and an outer laser cuts the plate to form outer tabs. The incoming electrode plate is then further split into an inner slitted electrode plate and an outer slitted electrode plate. The inner slitted electrode plate passes through an inner CCD station, where the width dimension, electrode plate length, tab width, tab height, tab spacing, and various appearance defects of the inner electrode plate are measured. When the electrode plate has a quality problem, a signal indicating the quality problem is sent to an inner marking machine for yellow labeling, and meanwhile, the signal indicating the quality problem is sent to the main equipment to trigger an alarm and shutdown. The outer slitted electrode plate passes through an inner CCD station, where the width dimension, electrode plate length, tab width, tab height, tab spacing, and various appearance defects of the outer electrode plate are measured. When the electrode plate is NG, an NG signal is sent to an outer marking machine for yellow labeling, and meanwhile, the NG signal is sent to the main equipment to trigger an alarm and shutdown. The width dimension of the inner electrode plate is compared with a standard value, the difference is sent to an inner laser head, and the width of the inner electrode plate is corrected by controlling the movement of the laser head. The width dimension of the outer electrode plate is compared with a standard value, and the difference value is sent to an outer laser head, and the width of the outer electrode plate is corrected by controlling the movement of the laser head.

In process of the die cutting processing, there may be a situation that the dimension of the electrode plate after the electrode plate processing does not meet the requirements. Therefore, according to the image information of the inner electrode plate and the image information of the outer electrode plate, all the dimension information of the electrode plate in the die cutting stage can be effectively determined, and the quality of the die cutting stage can be further determined through the dimension information. When there is an electrode plate with a dimension that does not meet the requirements, the information can be fed back to the processing station and the processing station can be adjusted to avoid the occurrence of batches of defective products, thereby improving the yield of the die cutting process.

In some embodiments, the inner electrode plate inspection mechanism 1004 includes one or more of an inner electrode plate reverse side visual inspection mechanism B, an inner electrode plate backlight visual inspection mechanism C, and an inner electrode plate front side visual inspection mechanism D. The inner electrode plate reverse side visual inspection mechanism B is configured to inspect a reverse side image of the inner electrode plate; the inner electrode plate backlight visual inspection mechanism C is configured to inspect a backlight image of the inner electrode plate; the inner electrode plate front side visual inspection mechanism D is configured to inspect a front side image of the inner electrode plate. The upper computer is further configured to determine the first image information according to one or more of the reverse side image of the inner electrode plate, the backlight image of the inner electrode plate, and the front side image of the inner electrode plate.

In the process of electrode plate inspection, relying solely on images captured by a single station can easily lead to misjudgments, and the image information collected from one angle may not be comprehensive. Therefore, by means of disposing electrode plate inspection mechanisms in multiple orientations, images of the inner electrode plate can be collected from multiple angles, allowing the dimension of the electrode plate to be determined according to multiple sets of image information, thereby improving the accuracy of quality inspection.

In some embodiments, the outer electrode plate inspection mechanism 1005 includes one or more of an outer electrode plate reverse side visual inspection mechanism E, an outer electrode plate backlight visual inspection mechanism F, and an outer electrode plate front side visual inspection mechanism H. The outer electrode plate reverse side visual inspection mechanism E is configured to inspect a reverse side image of the outer electrode plate; the outer electrode plate backlight visual inspection mechanism F is configured to inspect a backlight image of the outer electrode plate; the outer electrode plate front side visual inspection mechanism H is configured to inspect a front side image of the outer electrode plate. The upper computer is further configured to determine the second image information according to one or more of the reverse side image of the outer electrode plate, the backlight image of the outer electrode plate, and the front side image of the outer electrode plate.

In the process of electrode plate inspection, relying solely on images captured by a single station can easily lead to misjudgments, and the image information collected from one angle may not be comprehensive. Therefore, by means of disposing electrode plate inspection mechanisms in multiple orientations, images of the outer electrode plate can be collected from multiple angles, allowing the dimension of the electrode plate to be determined according to multiple sets of image information, thereby improving the accuracy of quality inspection.

In some embodiments, the inner electrode plate inspection mechanism 1004 includes an inner electrode plate reverse side visual inspection mechanism B. The inner electrode plate reverse side visual inspection mechanism B includes a first inner electrode plate image acquisition apparatus and a first inner electrode plate inspection light source. The first inner electrode plate image acquisition apparatus directly faces a reverse side of the inner electrode plate, and the first inner electrode plate inspection light source directly faces the reverse side of the inner electrode plate. The inner electrode plate reverse side visual inspection mechanism B is configured to inspect a reverse side image of the inner electrode plate.

Referring to FIG. 5, it is assumed that an inner electrode plate reverse side visual inspection mechanism B is provided on the transport path of the inner electrode plate, and an inner electrode plate reverse side image acquisition apparatus 25 and an inner electrode plate reverse side light source 26 are provided on the inner electrode plate reverse side visual inspection mechanism B. After the electrode plates are processed in a tab forming region A, the electrode plates are transported to an inner side and an outer side by a transport apparatus, respectively. The electrode plate on an inner transport path needs to pass through the inner electrode plate reverse side visual inspection mechanism B, such that a reverse side image of the inner electrode plate is acquired. 25, 27, 29, 31, 33, and 35 in FIG. 5 may be the same type of image acquisition apparatuses with only differences in their relative positions to the electrode plate and the light source, or may be a plurality of different types of image acquisition apparatuses, which may be provided according to the requirements of the production line. This embodiment does not limit this. The light sources represented by 26, 28, 30, 32, 33 and 35 are the same as the above image acquisition apparatuses in this regard.

By means of providing the reverse side visual inspection mechanism, and disposing both the image acquisition apparatus and the light source on the reverse side of the electrode plate, the reverse side image of the electrode plate can be clearly inspected. By means of acquiring the reverse side image, the diversity of inspection angles of the electrode plate is increased, and the inspection accuracy of the electrode plate is improved.

In some embodiments, the inner electrode plate inspection mechanism 1004 includes an inner electrode plate backlight visual inspection mechanism C. The inner electrode plate backlight visual inspection mechanism C includes a second inner electrode plate image acquisition apparatus and a second inner electrode plate inspection light source. The second inner electrode plate image acquisition apparatus directly faces a front side of the inner electrode plate, and the second inner electrode plate inspection light source directly faces a reverse side of the inner electrode plate. The inner electrode plate backlight visual inspection mechanism C is configured to inspect a backlight image of the inner electrode plate.

Referring to FIG. 5, it is assumed that an inner electrode plate backlight visual inspection mechanism C is provided on the transport path of the inner electrode plate, and an inner electrode plate backlight image acquisition apparatus 27 and an inner electrode plate inner electrode plate backlight light source 28 are provided on the inner electrode plate backlight visual inspection mechanism C. After the electrode plates are processed in a tab forming region A, the electrode plates are transported to an inner side and an outer side by a transport apparatus, respectively. The electrode plate on an inner transport path needs to pass through the inner electrode plate backlight visual inspection mechanism C, such that a backlight image of the inner electrode plate is acquired.

By means of providing the backlight visual inspection mechanism, and disposing both the image acquisition apparatus and the light source on both sides of the electrode plate, the backlight image of the electrode plate can be clearly inspected. By means of acquiring the backlight image, the diversity of inspection angles of the electrode plate is increased, and the inspection accuracy of the electrode plate is improved.

In some embodiments, the inner electrode plate inspection mechanism 1004 includes an inner electrode plate front side visual inspection mechanism D. The inner electrode plate front side visual inspection mechanism D includes a third inner electrode plate image acquisition apparatus and a third inner electrode plate inspection light source. The third inner electrode plate image acquisition apparatus directly faces a front side of the inner electrode plate, and the third inner electrode plate inspection light source directly faces the front side of the inner electrode plate. The inner electrode plate front side visual inspection mechanism D is configured to detect a front side image of the inner electrode plate.

Referring to FIG. 5, it is assumed that an inner electrode plate front side visual inspection mechanism D is provided on the transport path of the inner electrode plate, and an inner electrode plate front side image acquisition apparatus 29 and an inner electrode plate front side light source 30 are provided on the inner electrode plate front side visual inspection mechanism D. After the electrode plates are processed in a tab forming region A, the electrode plates are transported to an inner side and an outer side by a transport apparatus, respectively. The electrode plate on an inner transport path needs to pass through the inner electrode plate front side visual inspection mechanism D, such that a front side image of the inner electrode plate is acquired.

By means of providing the front side visual inspection mechanism, and disposing both the image acquisition apparatus and the light source on the front side of the electrode plate, the front side image of the electrode plate can be clearly inspected. By means of acquiring the front side image, the diversity of inspection angles of the electrode plate is increased, and the inspection accuracy of the electrode plate is improved.

In some embodiments, the outer electrode plate inspection mechanism 1005 includes an outer electrode plate reverse side visual inspection mechanism E. The outer electrode plate reverse side visual inspection mechanism E includes a first outer electrode plate image acquisition apparatus and a first outer electrode plate inspection light source. The first outer electrode plate image acquisition apparatus directly faces a reverse side of the outer electrode plate, and the first outer electrode plate inspection light source directly faces the reverse side of the outer electrode plate. The outer electrode plate reverse side visual inspection mechanism E is configured to inspect a reverse side image of the outer electrode plate.

Referring to FIG. 5, it is assumed that an outer electrode plate reverse side visual inspection mechanism E is provided on the transport path of the outer electrode plate, and an outer electrode plate reverse side image acquisition apparatus 31 and an outer electrode plate reverse side light source 32 are provided on the outer electrode plate reverse side visual inspection mechanism E. After the electrode plates are processed in a tab forming region A, the electrode plates are transported to an inner side and an outer side by a transport apparatus, respectively. The outer transport path needs to pass through the outer electrode plate reverse side visual inspection mechanism E, such that a reverse side image of the outer electrode plate is acquired.

By means of providing the reverse side visual inspection mechanism, and disposing both the image acquisition apparatus and the light source on the reverse side of the electrode plate, the reverse side image of the electrode plate can be clearly inspected. By means of acquiring the reverse side image, the diversity of inspection angles of the electrode plate is increased, and the inspection accuracy of the electrode plate is improved.

In some embodiments, the outer electrode plate inspection mechanism 1005 includes an outer electrode plate backlight visual inspection mechanism F. The outer electrode plate backlight visual inspection mechanism F includes a second outer electrode plate image acquisition apparatus and a second outer electrode plate inspection light source. The second outer electrode plate image acquisition apparatus directly faces a front side of the outer electrode plate, and the second outer electrode plate inspection light source directly faces a reverse side of the outer electrode plate. The outer electrode plate backlight visual inspection mechanism F is configured to detect a backlight image of the outer electrode plate.

Referring to FIG. 5, an outer electrode plate backlight visual inspection mechanism F is provided on the transport path of the outer electrode plate, and an outer electrode plate backlight image acquisition apparatus 33 and an outer electrode plate backlight light source 34 are provided on the outer electrode plate backlight visual inspection mechanism F. After the electrode plates are processed in a tab forming region A, the electrode plates are transported to an inner side and an outer side by a transport apparatus, respectively. The outer electrode plate backlight visual inspection mechanism F on the outer transport path, such that backlight information of the outer electrode plate is acquired.

By means of providing the backlight visual inspection mechanism, and disposing both the image acquisition apparatus and the light source on both sides of the electrode plate, the backlight image of the electrode plate can be clearly inspected. By means of acquiring the backlight image, the diversity of inspection angles of the electrode plate is increased, and the inspection accuracy of the electrode plate is improved.

In some embodiments, the outer electrode plate inspection mechanism 1005 includes an outer electrode plate front side visual inspection mechanism H. The outer electrode plate front side visual inspection mechanism H includes a third outer electrode plate image acquisition apparatus and a third outer electrode plate inspection light source. The third outer electrode plate image acquisition apparatus directly faces a front side of the outer electrode plate, and the third outer electrode plate inspection light source directly faces the front side of the outer electrode plate. The outer electrode plate front side visual inspection mechanism H is configured to detect a front side image of the outer electrode plate.

Referring to FIG. 5, it is assumed that an outer electrode plate front side visual inspection mechanism H is provided on the transport path of the outer electrode plate, and an outer electrode plate front side image acquisition apparatus 35 and an outer electrode plate front side light source 36 are provided on the outer electrode plate front side visual inspection mechanism H. After the electrode plates are processed in a tab forming region A, the electrode plates are transported to an inner side and an outer side by a transport apparatus, respectively. The outer transport path needs to pass through the outer electrode plate front side visual inspection mechanism H, such that a front side image of the outer electrode plate is acquired.

By means of providing the front side visual inspection mechanism, and disposing both the image acquisition apparatus and the light source on the front side of the electrode plate, the front side image of the electrode plate can be clearly inspected. By means of acquiring the front side image, the diversity of inspection angles of the electrode plate is increased, and the inspection accuracy of the electrode plate is improved.

Further proposed is a control system for a die cutting and slitting system. The method is applied to the die cutting and slitting system. The system includes an inner electrode plate inspection mechanism, an outer electrode plate inspection mechanism, an upper computer, and a conveying apparatus; controls the conveying apparatus to transport an inner electrode plate to pass through the inner electrode plate inspection mechanism; controls the conveying apparatus to transport an outer electrode plate to pass through the outer electrode plate inspection mechanism; controls the inner electrode plate inspection mechanism to acquire first image information of the inner electrode plate; controls the outer electrode plate inspection mechanism to acquire second image information of the outer electrode plate; sends the first image information and the second image information to the upper computer, such that the upper computer performs quality inspection according to the first image information and the second image information, to obtain an inspection result.

It should be noted that the execution body of this embodiment is a lower computer, and the lower computer is configured to control actuators in industrial production to perform industrial production operations.

The die cutting device may be a laser tab forming machine or other tab forming devices. This embodiment only takes a one-in-two-out electrode plate forming process as an example for illustration. The main functions may include two parts: tab forming and electrode plate slitting. The tab forming is used to process an electrode plate into a shape corresponding to a tab, and the electrode plate slitting is used to slit the electrode plate after the tab forming into an inner electrode plate and an outer electrode plate.

Referring to FIG. 2, the inner electrode plate inspection mechanism 1004, the outer electrode plate inspection mechanism 1005, and the conveying apparatus are arranged in the production line. The inner electrode plate inspection mechanism 1004 and the outer electrode plate inspection mechanism 1005 are configured to inspect the inner electrode plate and the outer electrode plate, respectively, and the inspection contents may include dimensions, appearance, shapes, defects, and the like of the electrode plates. Therefore, the inner electrode plate inspection mechanism 1004 and the outer electrode plate inspection mechanism 1005 may each be provided with an image detection apparatus to acquire image information of the inner electrode plate and the outer electrode plate, and then make judgments on the dimensions, appearance, shapes, defects, and the like of the electrode plates according to the image information. The first image information refers to image information of the outer electrode plate conveyed through an outer conveying apparatus 1003, and the second image information refers to image information of the inner electrode plate conveyed through an inner conveying apparatus 1002. The conveying apparatus may be a roller mechanism that can transport the electrode plates to different positions through rollers.

There may be many production parameters that need to be verified in the electrode plate tab forming process, for example, cutting specifications, which may include die-cutting width, tab height, tab spacing, tab width, marking position, slitting width, heat-affected zone, burrs, scratches, cracks, and the like. Therefore, it is necessary to analyze the first image information and the second image information to complete quality inspection of the inner electrode plate and the outer electrode plate.

Specifically, the quality inspection process includes identifying the position of a defective electrode plate through image information combined with image identification, object inspection, and other technologies to determine whether there are quality problems in the image, e.g., substandard dimensions, defects such as burrs and cracks, and the like.

In FIG. 2, the conveying apparatus is divided into an outer conveying apparatus 1003 and an inner conveying apparatus 1002, which transport materials to the next process stage, respectively. An inner electrode plate inspection mechanism 1004 and an outer electrode plate inspection mechanism 1005 are provided in the conveying path, and these mechanisms collect image information of the materials in the conveying process.

In this solution, inspections are respectively performed on the inner and outer electrode plates by the inner inspection mechanism and the outer inspection mechanism, such that the product quality of the electrode plates is confirmed according to the electrode plate images from the two paths, thereby ensuring timely deviation correction of the tab forming process. In the one-in-two-out cutting process of the laser cutting process, that is, after die cutting the electrode plate, the electrode plate is divided into two parts, that is, the inner and outer electrode plates, for separate inspection, so as to ensure that the die-cutting width, tab height, tab spacing, and the like of the inner and outer electrode plates meet quality requirements, thereby effectively improving the yield of the die cutting stage in the one-in-two-out cutting process, and effectively screening out electrode plates with poor quality.

In some embodiments, the control system for the die cutting and slitting system further includes an electrode plate processing mechanism; acquires the inspection result sent by the upper computer; controls the electrode plate processing mechanism to perform electrode plate processing according to the inspection result.

On the basis of quality inspection, further deviation correction of the electrode plate can be performed. As shown in FIG. 1, the electrode plate processing mechanism 1001 is configured to process the electrode plate. Specifically, the electrode plate processing mechanism 1001 can first die-cut the electrode plate, and then slit the electrode plate into an inner electrode plate and an outer electrode plate, and finally obtain formed tabs on the substrate. For example, assuming that a laser tab forming method is used in the die-cutting process, then at the processing station, as shown in FIG. 3, the electrode plate is cut by a laser device in a tab forming region, where an incoming electrode plate is cut to obtain tabs, thereby completing the tab forming. The electrode plate is then divided into two along the slitting line by a slitting apparatus to obtain an outer electrode plate and an inner electrode plate. The outer electrode plate and the inner electrode plate are then sent to various inspection mechanisms by a conveying apparatus for quality inspection.

Furthermore, the inner electrode plate is one of the electrode plates after slitting. As shown in FIG. 4, the electrode plate in FIG. 4 shows three tabs. The inner electrode plate and the outer electrode plate are generally the same in shape. If the slitting apparatus performs symmetrical cutting along the slitting line, the outer electrode plate and the inner electrode plate are almost completely symmetrical. Currently, according to process requirements, the two electrode plates may not be cut symmetrically, that is, the slitting line is closer to the tabs on one side. This embodiment does not limit this and only takes a symmetrical cutting method as an example for illustration. The first electrode plate dimension information of the inner electrode plate is determined according to the first image information, and the first electrode plate dimension information includes dimensions of various positions of the inner electrode plate, for example, an electrode plate width, a tab height, a tab width, and the like of the inner electrode plate.

The second electrode plate dimension information of the outer electrode plate is determined according to the second image information, and the second electrode plate dimension information refers to dimensions of various positions of the outer electrode plate, for example, an electrode plate width, a tab height, tab spacing, a tab width, and the like of the outer electrode plate.

After acquiring the dimension information, the dimension information can be compared with a process-required dimension, an electrode plate or tab with a dimension problem can be identified and the difference between the electrode plate or tab and the process-required dimension can be determined. The processing station is then adjusted, such that the same problem will not occur in the subsequent electrode plates and tabs, thereby completing the deviation correction of the die-cutting process. For example, when a problem with the tab spacing is inspected, the tab spacing is compared with a process-desired tab spacing to obtain a tab spacing deviation value. The laser module is then adjusted according to the tab spacing deviation value to ensure that the subsequent tab spacing is accurate. For another example, assuming that there is a problem with the electrode width, whether the problem lies in the slitting process or the die-cutting process can be determined by combining the tab height and the electrode width. If there is no problem with the tab height but there is a problem with the electrode width, the slitting position of the slitting device can be adjusted.

Specifically, referring to FIG. 6, an incoming electrode plate passes through a laser chamber, where an inner laser cuts the plate to form inner tabs, and an outer laser cuts the plate to form outer tabs. The incoming electrode plate is then further split into an inner slitted electrode plate and an outer slitted electrode plate. The inner slitted electrode plate passes through an inner CCD station, where the width dimension, electrode plate length, tab width, tab height, tab spacing, and various appearance defects of the inner electrode plate are measured. When the electrode plate has a quality problem, a signal indicating the quality problem is sent to an inner marking machine for yellow labeling, and meanwhile, the signal indicating the quality problem is sent to the main equipment to trigger an alarm and shutdown. The outer slitted electrode plate passes through an inner CCD station, where the width dimension, electrode plate length, tab width, tab height, tab spacing, and various appearance defects of the outer electrode plate are measured. When the electrode plate is NG, an NG signal is sent to an outer marking machine for yellow labeling, and meanwhile, the NG signal is sent to the main equipment to trigger an alarm and shutdown. The width dimension of the inner electrode plate is compared with a standard value, the difference is sent to an inner laser head, and the width of the inner electrode plate is corrected by controlling the movement of the laser head. The width dimension of the outer electrode plate is compared with a standard value, and the difference value is sent to an outer laser head, and the width of the outer electrode plate is corrected by controlling the movement of the laser head.

In process of the die cutting processing, there may be a situation that the dimension of the electrode plate after the electrode plate processing does not meet the requirements. Therefore, according to the image information of the inner electrode plate and the image information of the outer electrode plate, all the dimension information of the electrode plate in the die cutting stage can be effectively determined, and the quality of the die cutting stage can be further determined through the dimension information. When there is an electrode plate with a dimension that does not meet the requirements, the information can be fed back to the processing station and the processing station can be adjusted to avoid the occurrence of batches of defective products, thereby improving the yield of the die cutting process.

In some embodiments, as shown in FIG. 1, the die cutting and slitting system includes an inner electrode plate inspection mechanism 1004, an outer electrode plate inspection mechanism 1005, and a conveying apparatus. The conveying apparatus is configured to transport an inner electrode plate to pass through the inner electrode plate inspection mechanism 1004, and the conveying apparatus is configured to transport an outer electrode plate to pass through the outer electrode plate inspection mechanism 1005. A visual inspection method for die cutting and slitting includes: In S10, the upper computer is configured to acquire first image information and second image information. In S20, quality inspection is performed according to the first image information and the second image information, where the first image information is an image acquired by the inner electrode plate inspection mechanism 1004, and the second image information is an image acquired by the outer electrode plate inspection mechanism 1005.

The die cutting device may be a laser tab forming machine or other tab forming devices. This embodiment only takes a one-in-two-out electrode plate forming process as an example for illustration. The main functions may include two parts: tab forming and electrode plate slitting. The tab forming is used to process an electrode plate into a shape corresponding to a tab, and the electrode plate slitting is used to slit the electrode plate after the tab forming into an inner electrode plate and an outer electrode plate.

Referring to FIG. 2, the inner electrode plate inspection mechanism 1004, the outer electrode plate inspection mechanism 1005, and the conveying apparatus are arranged in the production line. The inner electrode plate inspection mechanism 1004 and the outer electrode plate inspection mechanism 1005 are configured to inspect the inner electrode plate and the outer electrode plate, respectively, and the inspection contents may include dimensions, appearance, shapes, defects, and the like of the electrode plates. Therefore, the inner electrode plate inspection mechanism 1004 and the outer electrode plate inspection mechanism 1005 may each be provided with an image detection apparatus to acquire image information of the inner electrode plate and the outer electrode plate, and then make judgments on the dimensions, appearance, shapes, defects, and the like of the electrode plates according to the image information. The first image information refers to image information of the outer electrode plate conveyed through an outer conveying apparatus 1003, and the second image information refers to image information of the inner electrode plate conveyed through an inner conveying apparatus 1002. The conveying apparatus may be a roller mechanism that can transport the electrode plates to different positions through rollers.

There may be many production parameters that need to be verified in the electrode plate tab forming process, for example, cutting specifications, which may include die-cutting width, tab height, tab spacing, tab width, marking position, slitting width, heat-affected zone, burrs, scratches, cracks, and the like. Therefore, it is necessary to analyze the first image information and the second image information to complete quality inspection of the inner electrode plate and the outer electrode plate.

Specifically, the quality inspection process includes identifying the position of a defective electrode plate through image information combined with image identification, object inspection, and other technologies to determine whether there are quality problems in the image, e.g., substandard dimensions, defects such as burrs and cracks, and the like.

In FIG. 2, the conveying apparatus is divided into an outer conveying apparatus 1003 and an inner conveying apparatus 1002, which transport materials to the next process stage, respectively. An inner electrode plate inspection mechanism 1004 and an outer electrode plate inspection mechanism 1005 are provided in the conveying path, and these mechanisms collect image information of the materials in the conveying process.

In this solution, inspections are respectively performed on the inner and outer electrode plates by the inner inspection mechanism and the outer inspection mechanism, such that the product quality of the electrode plates is confirmed according to the electrode plate images from the two paths, thereby ensuring timely deviation correction of the tab forming process. In the one-in-two-out cutting process of the laser cutting process, that is, after die cutting the electrode plate, the electrode plate is divided into two parts, that is, the inner and outer electrode plates, for separate inspection, so as to ensure that the die-cutting width, tab height, tab spacing, and the like of the inner and outer electrode plates meet quality requirements, thereby effectively improving the yield of the die cutting stage in the one-in-two-out cutting process, and effectively screening out electrode plates with poor quality.

In some embodiments, the die cutting and slitting system further includes an electrode plate processing mechanism 1001. The electrode plate processing mechanism 1001 is configured to process the inner electrode plate and the outer electrode plate. The performing quality inspection according to the first image information and the second image information further includes: determining first electrode plate dimension information of the inner electrode plate according to the first image information, and determining second electrode plate dimension information of the outer electrode plate according to the second image information; after the performing quality inspection according to the first image information and the second image information, the method further includes: adjusting the electrode plate processing mechanism 1001 according to the first electrode plate dimension information and/or the second electrode plate dimension information.

On the basis of quality inspection, further deviation correction of the electrode plate can be performed. As shown in FIG. 2, the electrode plate processing mechanism 1001 is configured to process the electrode plate. Specifically, the electrode plate processing mechanism 1001 can first die-cut the electrode plate, and then slit the electrode plate into an inner electrode plate and an outer electrode plate, and finally obtain formed tabs on the substrate. For example, assuming that a laser tab forming method is used in the die-cutting process, then at the processing station, as shown in FIG. 3, the electrode plate is cut by a laser device in a tab forming region, where an incoming electrode plate is cut to obtain tabs, thereby completing the tab forming. The electrode plate is then divided into two along the slitting line by a slitting apparatus to obtain an outer electrode plate and an inner electrode plate. The outer electrode plate and the inner electrode plate are then sent to various inspection mechanisms by a conveying apparatus for quality inspection.

Furthermore, the inner electrode plate is one of the electrode plates after slitting. As shown in FIG. 4, the electrode plate in FIG. 4 shows three tabs. The inner electrode plate and the outer electrode plate are generally the same in shape. If the slitting apparatus performs symmetrical cutting along the slitting line, the outer electrode plate and the inner electrode plate are almost completely symmetrical. Currently, according to process requirements, the two electrode plates may not be cut symmetrically, that is, the slitting line is closer to the tabs on one side. This embodiment does not limit this and only takes a symmetrical cutting method as an example for illustration. The first electrode plate dimension information of the inner electrode plate is determined according to the first image information, and the first electrode plate dimension information includes dimensions of various positions of the inner electrode plate, for example, an electrode plate width, a tab height, a tab width, and the like of the inner electrode plate.

The second electrode plate dimension information of the outer electrode plate is determined according to the second image information, and the second electrode plate dimension information refers to dimensions of various positions of the outer electrode plate, for example, an electrode plate width, a tab height, tab spacing, a tab width, and the like of the outer electrode plate.

After acquiring the dimension information, the dimension information can be compared with a process-required dimension, an electrode plate or tab with a dimension problem can be identified and the difference between the electrode plate or tab and the process-required dimension can be determined. The processing station is then adjusted, such that the same problem will not occur in the subsequent electrode plates and tabs, thereby completing the deviation correction of the die-cutting process. For example, when a problem with the tab spacing is inspected, the tab spacing is compared with a process-desired tab spacing to obtain a tab spacing deviation value. The laser module is then adjusted according to the tab spacing deviation value to ensure that the subsequent tab spacing is accurate. For another example, assuming that there is a problem with the electrode width, whether the problem lies in the slitting process or the die-cutting process can be determined by combining the tab height and the electrode width. If there is no problem with the tab height but there is a problem with the electrode width, the slitting position of the slitting device can be adjusted.

Specifically, referring to FIG. 6, an incoming electrode plate passes through a laser chamber, where an inner laser cuts the plate to form inner tabs, and an outer laser cuts the plate to form outer tabs. The incoming electrode plate is then further split into an inner slitted electrode plate and an outer slitted electrode plate. The inner slitted electrode plate passes through an inner CCD station, where the width dimension, electrode plate length, tab width, tab height, tab spacing, and various appearance defects of the inner electrode plate are measured. When the electrode plate has a quality problem, a signal indicating the quality problem is sent to an inner marking machine for yellow labeling, and meanwhile, the signal indicating the quality problem is sent to the main equipment to trigger an alarm and shutdown. The outer slitted electrode plate passes through an inner CCD station, where the width dimension, electrode plate length, tab width, tab height, tab spacing, and various appearance defects of the outer electrode plate are measured. When the electrode plate is NG, an NG signal is sent to an outer marking machine for yellow labeling, and meanwhile, the NG signal is sent to the main equipment to trigger an alarm and shutdown. The width dimension of the inner electrode plate is compared with a standard value, the difference is sent to an inner laser head, and the width of the inner electrode plate is corrected by controlling the movement of the laser head. The width dimension of the outer electrode plate is compared with a standard value, and the difference value is sent to an outer laser head, and the width of the outer electrode plate is corrected by controlling the movement of the laser head.

In process of the die cutting processing, there may be a situation that the dimension of the electrode plate after the electrode plate processing does not meet the requirements. Therefore, according to the image information of the inner electrode plate and the image information of the outer electrode plate, all the dimension information of the electrode plate in the die cutting stage can be effectively determined, and the quality of the die cutting stage can be further determined through the dimension information. When there is an electrode plate with a dimension that does not meet the requirements, the information can be fed back to the processing station and the processing station can be adjusted to avoid the occurrence of batches of defective products, thereby improving the yield of the die cutting process.

In some embodiments, a plurality of the inner electrode plate inspection mechanisms 1004 are provided, and the die cutting and slitting system includes the inner electrode plate inspection mechanisms 1004 provided. The inner electrode plate inspection mechanisms 1004 each include an inner electrode plate image acquisition apparatus and an inner electrode plate inspection light source. The relative positions of the inner electrode plate image acquisition apparatus and the inner electrode plate inspection light source in each of the inner electrode plate inspection mechanisms 1004 to the inner electrode plate inspection mechanisms 1004 are different. The determining the first electrode plate dimension information of the inner electrode plate according to the first image information includes: determining the first electrode plate dimension information of the inner electrode plate according to the first image information corresponding to each of the inner electrode plate inspection mechanisms 1004.

There may be a variety of problems in the electrode plate inspection stage, e.g., one or more of the following problems: die cutting width, tab height, tab spacing, tab width, marking position, slitting width, heat-affected zone, burr, scratch and crack that do not meet the expected production results. However, these problems may cause unclear image acquisition, occlusion or reflection due to lighting angle, image acquisition angle or material itself in actual production, resulting in the inability to accurately inspect the quality of electrode plates. Therefore, in this embodiment, the occurrence of this situation is reduced by providing a plurality of inspection mechanisms with different relative positions among the light source, image acquisition apparatus, and the electrode plate on the inner electrode plate transport path. For example, assuming that the position of the electrode plate is shifted, causing the reflection on the front side of the electrode plate, it is difficult for the inner inspection mechanism with both the light source and the camera on the front side of the electrode plate to clearly acquire the image of the electrode plate, which will affect the dimension inspection of the electrode plate. In this case, if a second inner inspection mechanism is provided, the occurrence of this situation can be effectively avoided and various dimension parameters of the electrode plate can be successfully inspected.

The first electrode plate dimension information may include: one or more of various dimensions including die cutting width, tab height, tab spacing, tab width, slitting width, electrode width, and the like.

The inner electrode plate image acquisition apparatus and the inner electrode plate inspection light source are an image acquisition apparatus and a light source with which the inner electrode plate inspection mechanism 1004 is equipped. The inner electrode plate inspection light source emits light to the electrode plate, and the inner electrode plate image acquisition apparatus acquires light reflected or refracted by the electrode plate to form first image information. The inner electrode plate image acquisition apparatus refers to an image acquisition apparatus corresponding to the inner electrode plate inspection mechanism 1004, which may be an image acquisition apparatus corresponding to any one of the inner electrode plate inspection mechanisms 1004, and is not used to specifically refer to a particular image acquisition apparatus. The same applies to the inner electrode plate inspection light source.

The process of confirming the first electrode plate dimension information involves finding the inspected target parts (such as tabs) according to the target recognition or contour recognition technology through the recognized electrode plate image, and then converting pixel coordinates into actual coordinates to calculate dimensions of various parts according to internal parameters and external parameters calibrated by the image acquisition apparatus, and the dimension set of various parts on the inner electrode plate is the first electrode plate dimension information.

In fact, the inner electrode plate and the outer electrode plate are only used to distinguish the two for the convenience of illustration. Either of the two electrode plates after slitting can be selected as the inner electrode plate and the other as the outer electrode plate. The inner and outer sides are not used to define a specific type of electrode plate.

The determining the first electrode plate dimension information of the inner electrode plate according to the first image information corresponding to each of the inner electrode plate inspection mechanisms 1004 may include: obtaining second electrode plate dimension information by analyzing second image information acquired by any designated electrode collection station. For example, the first electrode plate dimension information is determined according to the image information acquired by any designated inner electrode plate inspection mechanism 1004, and when the image information acquired by the inner electrode plate inspection mechanism 1004 cannot complete the dimension information analysis, it indicates a problem with the image. In this case, the dimension information acquired by another inner electrode plate inspection mechanism 1004 is used for analysis.

In some embodiments, the determining the first electrode plate dimension information of the inner electrode plate according to the first image information corresponding to each of the inner electrode plate inspection mechanisms 1004 may further include: obtaining dimensions from the respective first image information according to the first image information corresponding to each of the inner electrode plate inspection mechanisms 1004, and then calculating the actual dimension by statistical means, thereby improving the inspection precision. The statistical means include, for example, calculating an average value or screening out data with excessive deviation (data not in a reasonable range).

In the process of electrode plate inspection, relying solely on images captured by a single station can easily lead to misjudgments, and the image information collected from one angle may not be comprehensive. Therefore, by means of disposing electrode plate inspection mechanisms in multiple orientations, images of the inner electrode plate can be collected from multiple angles, allowing the dimension of the electrode plate to be determined according to multiple sets of image information, thereby improving the accuracy of quality inspection.

In some embodiments, a plurality of the outer electrode plate inspection mechanisms 1005 are provided. The outer electrode plate inspection mechanisms 1005 each include an outer electrode plate image acquisition apparatus and an outer electrode plate inspection light source. The relative positions of the outer electrode plate image acquisition apparatus and the outer electrode plate inspection light source in each of the outer electrode plate inspection mechanisms 1005 to the outer electrode plate are different. The determining the second electrode plate dimension information of the outer electrode plate according to the second image information includes: determining the second electrode plate dimension information of the outer electrode plate according to the second image information corresponding to each of the outer electrode plate inspection mechanisms 1005.

There may be a variety of problems in the electrode plate inspection stage, e.g., one or more of the following problems: die cutting width, tab height, tab spacing, tab width, marking position, slitting width, heat-affected zone, burr, scratch and crack that do not meet the expected production results. However, these problems may cause unclear image acquisition, occlusion or reflection due to lighting angle, image acquisition angle or material itself in actual production, resulting in the inability to accurately inspect the quality of electrode plates. Therefore, in this embodiment, the occurrence of this situation is reduced by providing a plurality of inspection mechanisms with different relative positions among the light source, image acquisition apparatus, and the electrode plate on the outer electrode plate transport path. For example, assuming that the position of the electrode plate is shifted, causing the reflection on the front side of the electrode plate, it is difficult for the outer inspection mechanism with both the light source and the camera on the front side of the electrode plate to clearly acquire the image of the electrode plate, which will affect the dimension inspection of the electrode plate. In this case, if a second outer inspection mechanism is provided, the occurrence of this situation can be effectively avoided and various dimension parameters of the electrode plate can be successfully inspected.

The outer electrode plate image acquisition apparatus and the outer electrode plate inspection light source are an image acquisition apparatus and a light source with which the outer electrode plate inspection mechanism 1005 is equipped. The outer electrode plate inspection light source emits light to the electrode plate, and the outer electrode plate image acquisition apparatus collects light reflected or refracted by the electrode plate to form second image information.

The process of confirming the second electrode plate dimension information involves finding the inspected target parts (such as tabs) according to the target recognition or contour recognition technology through the recognized electrode plate image, and then converting pixel coordinates into actual coordinates to calculate dimensions of various parts according to internal parameters and external parameters calibrated by the image acquisition apparatus, and the dimension set of various parts on the outer electrode plate is the second electrode plate dimension information.

In the process of electrode plate inspection, relying solely on images captured by a single station can easily lead to misjudgments, and the image information collected from one angle may not be comprehensive. Therefore, by means of disposing electrode plate inspection mechanisms in multiple orientations, images of the inner electrode plate can be collected from multiple angles, allowing the dimension of the electrode plate to be determined according to multiple sets of image information, thereby improving the accuracy of quality inspection.

In some embodiments, the inner electrode plate inspection mechanism 1004 includes one or more of an inner electrode plate reverse side visual inspection mechanism B, an inner electrode plate backlight visual inspection mechanism C, and an inner electrode plate front side visual inspection mechanism D. The inner electrode plate reverse side visual inspection mechanism B is configured to inspect a reverse side image of the inner electrode plate; the inner electrode plate backlight visual inspection mechanism C is configured to inspect a backlight image of the inner electrode plate; the inner electrode plate front side visual inspection mechanism D is configured to inspect a front side image of the inner electrode plate. The determining the first electrode plate dimension information of the inner electrode plate according to the first image information includes: determining the first electrode plate dimension information of the inner electrode plate according to one or more of the reverse side image of the inner electrode plate, the backlight image of the inner electrode plate, and the front side image of the inner electrode plate.

Specifically, for the arrangement of a plurality of inspection mechanisms, this embodiment proposes the following preferred solution: an inner electrode plate reverse side visual inspection mechanism B, an inner electrode plate backlight visual inspection mechanism C, and an inner electrode plate front side visual inspection mechanism D. The inner electrode plate reverse side visual inspection mechanism B means that the inner electrode plate image acquisition apparatus and the inner electrode plate inspection light source corresponding to the station are both located on the reverse side of the inner electrode plate, and this mechanism is configured to acquire electrode plate dimension information on the reverse side of the electrode plate. The inner electrode plate backlight visual inspection mechanism C means that the inner electrode plate image acquisition apparatus and the inner electrode plate inspection light source corresponding to the station are located on both sides of the inner electrode plate, and this mechanism is configured to determine the electrode plate dimension information of the electrode plate through the light signal penetrating the plane where the electrode plate is located under backlight conditions. The inner electrode plate front side visual inspection mechanism D means that the inner electrode plate image acquisition apparatus and the inner electrode plate inspection light source corresponding to the station are both located on the front side of the inner electrode plate, and this mechanism is configured to acquire electrode plate dimension information on the front side of the electrode plate.

Referring to FIG. 5, it is assumed that an inner electrode plate reverse side visual inspection mechanism B, an inner electrode plate backlight visual inspection mechanism C, and an inner electrode plate front side visual inspection mechanism D are provided on the transport path of the inner electrode plate. An inner electrode plate reverse side image acquisition apparatus 25 and an inner electrode plate reverse side light source 26 are provided on the inner electrode plate reverse side visual inspection mechanism B; an inner electrode plate backlight image acquisition apparatus 27 and an inner electrode plate backlight light source 28 are provided on the inner electrode plate backlight visual inspection mechanism C; an inner electrode plate front side image acquisition apparatus 29 and an inner electrode plate front side light source 30 are provided on the inner electrode plate front side visual inspection mechanism D. After the inner electrode plate is processed in a tab forming region A, it is transported by a transport apparatus. The transportation apparatus may be composed of a plurality of rollers 3, which provide power to convey the electrode plates to an inner side and an outer side. The electrode plate on an inner transport path needs to pass through the inner electrode plate reverse side visual inspection mechanism B, the inner electrode plate backlight visual inspection mechanism C, and the inner electrode plate front side visual inspection mechanism D sequentially, such that the first electrode plate dimension information is acquired.

Through image acquisition under front side, reverse side, and backlight conditions, the system can obtain a very comprehensive view of the electrode plate. Even if there are problems with the image acquisition conditions on one or even both sides of the electrode plate, the system can still accurately complete the acquisition of the first electrode plate dimension information, which enhances the adaptability of the system while improving the stability of the inspection process.

By means of acquiring the front side image, the backlight image and the reverse side image of the inner electrode plate, all the information of the inner electrode plate can be determined almost without a dead angle. This is because if an image is acquired at a random angle in the actual inspection process, the image quality may affected by reflection, blur, smear, etc., but this situation can be effectively avoided by the front side image, the backlight image and the reverse side image, and the dimension can be determined in time when there are problems in the other two methods. Further, image acquisition is always prone to errors due to the limitation of environment. By means of performing comprehensive calculations using images acquired from three different angles, errors can be effectively reduced, thereby improving the accuracy of the first electrode plate dimension information.

In some embodiments, the outer electrode plate inspection mechanism 1005 includes one or more of an outer electrode plate reverse side visual inspection mechanism E, an outer electrode plate backlight visual inspection mechanism F, and an outer electrode plate front side visual inspection mechanism H. The outer electrode plate reverse side visual inspection mechanism E is configured to inspect a reverse side image of the outer electrode plate; the outer electrode plate backlight visual inspection mechanism F is configured to inspect a backlight image of the outer electrode plate; the outer electrode plate front side visual inspection mechanism H is configured to inspect a front side image of the outer electrode plate. The determining the second electrode plate dimension information of the outer electrode plate according to the second image information includes: determining the second electrode plate dimension information of the outer electrode plate according to one or more of the reverse side image of the outer electrode plate, the backlight image of the outer electrode plate, and the front side image of the outer electrode plate.

Specifically, for the arrangement of a plurality of inspection mechanisms, this embodiment proposes the following preferred solution: an outer electrode plate reverse side visual inspection mechanism E, an outer electrode plate backlight visual inspection mechanism F, and an outer electrode plate front side visual inspection mechanism H. The outer electrode plate reverse side visual inspection mechanism E means that the outer electrode plate image acquisition apparatus and the outer electrode plate inspection light source corresponding to the station are both located on the reverse side of the outer electrode plate, and this mechanism is configured to acquire electrode plate dimension information on the reverse side of the electrode plate. The outer electrode plate backlight visual inspection mechanism F means that the outer electrode plate image acquisition apparatus and the outer electrode plate inspection light source corresponding to the station are located on both sides of the outer electrode plate, and this mechanism is configured to determine the electrode plate dimension information of the electrode plate through the light signal penetrating the plane where the electrode plate is located under backlight conditions. The outer electrode plate front side visual inspection mechanism H means that the outer electrode plate image acquisition apparatus and the outer electrode plate inspection light source corresponding to the station are both located on the front side of the outer electrode plate, and this mechanism is configured to acquire electrode plate dimension information on the front side of the electrode plate.

Referring to FIG. 5, it is assumed that an outer electrode plate reverse side visual inspection mechanism E, an outer electrode plate backlight visual inspection mechanism F, and an outer electrode plate front side visual inspection mechanism H are provided on the transport path of the outer electrode plate. An outer electrode plate reverse side image acquisition apparatus 31 and an outer electrode plate reverse side light source 32 are provided on the outer electrode plate reverse side visual inspection mechanism E; an outer electrode plate backlight image acquisition apparatus 33 and an outer electrode plate backlight light source 34 are provided on the outer electrode plate backlight visual inspection mechanism F; and an outer electrode plate front side image acquisition apparatus 35 and an outer electrode plate front side light source 36 are provided on the outer electrode plate front side visual inspection mechanism H. After the outer electrode plate is processed in a tab forming region A, it is transported to an inner side and an outer side by a transport apparatus. The outer transport path needs to pass through the outer electrode plate reverse side visual inspection mechanism E, the outer electrode plate backlight visual inspection mechanism F, and the outer electrode plate front side visual inspection mechanism H sequentially, such that the second electrode plate dimension information is acquired.

Through image acquisition under front side, reverse side, and backlight conditions, the system can obtain a very comprehensive view of the electrode plate. Even if there are problems with the image acquisition conditions on one or even both sides of the electrode plate, the system can still accurately complete the acquisition of the second electrode plate dimension information, which enhances the adaptability of the system while improving the stability of the inspection process.

By means of acquiring the front side image, the backlight image and the reverse side image of the outer electrode plate, all the information of the outer electrode plate can be determined almost without a dead angle. This is because if an image is acquired at a random angle in the actual inspection process, the image quality may affected by reflection, blur, smear, etc., but this situation can be effectively avoided by the front side image, the backlight image and the reverse side image, and the dimension can be determined in time when there are problems in the other two methods. Further, image acquisition is always prone to errors due to the limitation of environment. By means of performing comprehensive calculations using images acquired from three different angles, errors can be effectively reduced, thereby improving the accuracy of the second electrode plate dimension information.

In some embodiments, the determining the first electrode plate dimension information of the inner electrode plate according to the first image information includes: determining an electrode width of the inner electrode plate according to the first image information; comparing the electrode width of the inner electrode plate with a preset standard electrode width interval to determine the first electrode plate dimension information.

It should be noted that the first electrode plate dimension information includes at least one dimension, and may also include information on whether the dimension meets the requirements. This is because during deviation correction, it is not only necessary to determine the degree of deviation correction, but also to provide a clear signal indicating whether to perform deviation correction. Therefore, it is necessary to determine one or more dimensions to obtain the dimension information of the first electrode plate. Each type of dimension can be determined by the solution of this embodiment. This embodiment only takes an electrode width as an example for illustration, and is not intended to limit the types of dimensions. For example, the electrode width of the inner electrode plate is determined according to the first image information. The first image information may be a certain frame of image inspected by a certain inspection mechanism or a collection of a plurality of frame images by a plurality of inspection mechanisms. The target inspection of the inner electrode plate is performed through the image or a plurality of frames of images, and the actual dimension of the electrode width is calculated according to the internal calibration value of the image acquisition apparatus. The actual dimension is then compared with a preset standard electrode width interval, which is a reasonable electrode width interval value set by the technician according to the process requirements.

Since the first electrode plate dimension information is information required to be used for adjusting the processing of the electrode plate, the first electrode plate dimension information needs to provide a basis for whether the inner electrode plate meets the standard dimension, and how much the electrode plate dimension exceeds the standard dimension when it does not meet the standard dimension. Therefore, by means of comparing the electrode width of the inner electrode plate with the preset standard electrode width interval to determine whether the electrode width of the inner electrode plate meets the standard dimension or how much the electrode width of the inner electrode plate exceeds the standard dimension when it does not meet the standard dimension, the efficiency of the deviation correction of the processing station is improved.

In some embodiments, the determining the electrode width of the inner electrode plate according to the first image information includes: determining a plurality of sampled image frames according to the first image information; determining an electrode width corresponding to each of the sampled image frames according to each of the sampled image frames; determining the electrode width of the inner electrode plate according to the electrode width corresponding to each of the sampled image frames.

In order to ensure the stability and accuracy of the electrode width of the inner electrode plate, a plurality of frames of images can be selected for comprehensive determination. This is because relying solely on a single image to determine the electrode width is likely to result in a large deviation. Specifically, for the electrode width determination process, this embodiment proposes the following preferred solution: acquiring a plurality of frames of images from the first image information as sampled image frames. The specific acquisition method may include: using all the frames that have been collected, or extracting a frame of image at certain frame intervals, or filtering the image frames by clarity to obtain sampled image frames; determining an electrode width corresponding to each of the sampled image frames according to the plurality of sampled image frames; performing calculation on the obtained plurality of electrode widths to obtain the electrode width. The specific calculation process may include: assuming that there are three frames of images u1, u2 and u3, calculating the average of the plurality of frames of images as (u1 + u2 + u3)/3 = w, and determining whether w is within a tolerance q. If it is within the tolerance, no deviation correction is needed and the process does not proceed further. If w > 0, it indicates that the electrode plate is cut too wide, and the outer laser mechanism should be adjusted to the left for cutting; conversely, it should be adjusted to the right. The electrode width of the inner electrode plate can also be determined by other statistical means, which is not limited in this embodiment.

In the actual inspection process, relying solely on a single image to determine dimensions is likely to result in errors. Therefore, a plurality of sampled image frames can be determined, and the electrode width is comprehensively determined by a plurality of frames of images, which improves the accuracy of determining the electrode width of the inner electrode plate.

In some embodiments, the determining the electrode width corresponding to each of the sampled image frames according to each of the sampled image frames includes: determining a plurality of sampling points according to the sampled image frames; determining a sampling electrode width value corresponding to each of the sampling points according to the sampled image frames; determining the electrode widths corresponding to the sampled image frames according to each of the sampling electrode width values.

Further, in order to ensure the electrode width corresponding to each image frame, this embodiment proposes the following preferred solution. For example, referring to FIG. 4, it is assumed that three sampling points are selected in one frame of image corresponding to the electrode plate on one side, denoted as sampling point 1, sampling point 2, and sampling point 3, and three electrode widths corresponding to the three sampling points in the frame of image are calculated. Taking the inner electrode plate as an example (the same applies to the outer electrode plate), the widths are designated as electrode width 1, electrode width 2, and electrode width 3. Then, calculation is performed according to electrode width 1 - standard electrode width = a1, electrode width 2 - standard electrode width = a2, electrode width 3 - standard electrode width = a3, where the standard electrode width is the electrode width specified by the process. The standard tolerance is defined as q = (-0.5,0.5). (a1 + a2 + a3)/3 = u1, where u1 is the sampling electrode width value corresponding to the current sampled image frame, and this value is recorded.

In order to avoid a relatively large error in the final inspection result caused by a large error of a certain frame image, it is necessary to stabilize the electrode width value inspected in each frame of image. Therefore, a plurality of sampling points can be determined in the sampled image frame for comprehensive calculation, which improves the accuracy of the electrode width value inspected in each frame image.

In some embodiments, the determining the electrode width of the inner electrode plate according to the first image information includes: determining a backlight image of the inner electrode plate according to the first image information; determining the electrode width of the inner electrode plate according to the backlight image of the inner electrode plate.

Since the light source and the image acquisition apparatus are on both sides of the electrode plate when the backlight image is inspected, there is almost no problem of reflection. In addition, there is a significant difference in grayscale value between the background and the surface of the electrode plate. Therefore, the backlight image of the inner electrode plate should be the clearest among all images. Preferably, the electrode width of the inner electrode plate can be determined by the backlight image of the inner electrode plate.

Generally, the backlight image requires the light emitted by the light source to pass through the electrode plate, and the maximum contour of the electrode plate is inspected. For example, when the image is beveled or one side is cut crooked, whether the cutting error occurs on the front side or the back side, it can be captured through the backlight image. Therefore, it will be more comprehensive to determine the electrode width of the inner electrode plate through the backlight image, which improves the accuracy of inspecting the electrode width of the inner electrode plate.

In some embodiments, the die cutting and slitting system further includes a first marking apparatus and a second marking apparatus. When the first electrode plate dimension information does not meet the first preset dimension information, the first marking apparatus is controlled to mark the inner electrode plate; when the second electrode plate dimension information does not meet the second preset dimension information, the second marking apparatus is controlled to mark the outer electrode plate.

The first marking apparatus and the second marking apparatus are configured to mark the inner electrode plate and the outer electrode plate, respectively. The first marking apparatus marks the inner electrode plate, and the second marking apparatus marks the outer electrode plate, both for marking the electrode plate having a problem. Defective products are marked and an alarm is triggered to prevent the defective products from flowing out and causing large-scale product scrapping. On this basis, a variety of Poka-yoke measures can be taken. For example, if the electrode plate inspection mechanism is not activated, the main equipment will be prevented from starting operation. In addition, after the number of unqualified detections for a roll of incoming material reaches the set value N, the system will trigger an alarm and shutdown, and the engineer will analyze the cause, thereby improving the product yield.

The first marking apparatus and the second marking apparatus can mark the unqualified electrode plates in time, for identification by subsequent process stages. The marked electrode plates are collected into the scrap machine, thereby improving the efficiency of the waste recycling and increasing the yield of the die cutting process.

In some embodiments, the performing quality inspection according to the first image information and the second image information further includes: determining first electrode plate defect information of the inner electrode plate according to the first image information; determining second electrode plate defect information of the outer electrode plate according to the second image information; and generating alarm information when the first electrode plate defect information indicates that a defect is present or the second electrode plate defect information indicates that a defect is present.

Defect information can include cracks, scratches, burrs, and other problems. In the process of quality inspection, there will be not only dimensional problems, but also defects. These can arise from multiple causes, including inherent quality issues in the incoming materials, or improper equipment calibration, insufficient machining precision, defects in the processing workflow or contamination by foreign objects during production. Therefore, it is necessary to conduct testing next time to improve the yield.

Since there are problems such as cutting defects in the production process of the electrode plate, the defects of the electrode plate can be further detected based on the image information collected by the inner electrode plate inspection mechanism 1004 and the outer electrode plate inspection mechanism 1005, so as to improve the quality of the electrode plate and reduce the occurrence of defective products.

In some embodiments, the inner electrode plate inspection mechanism 1004 includes an inner electrode plate reverse side visual inspection mechanism B, an inner electrode plate backlight visual inspection mechanism C, and an inner electrode plate front side visual inspection mechanism D. The determining the first electrode plate defect information of the inner electrode plate according to the first image information includes: determining a reverse side image of the inner electrode plate, a backlight image of the inner electrode plate, and a front side image of the inner electrode plate according to the first image information; determining a reverse side defect condition of the inner electrode plate according to the reverse side image of the inner electrode plate; determining a front side defect condition of the inner electrode plate according to the front side image of the inner electrode plate; determining an internal defect condition of the inner electrode plate according to the backlight image of the inner electrode plate; determining the first electrode plate defect information of the inner electrode plate according to the front side defect condition, the reverse side defect condition, and the internal defect condition.

Specifically, for the arrangement of a plurality of inspection mechanisms, this embodiment proposes the following preferred solutions: the inner electrode plate reverse side visual inspection mechanism B, the inner electrode plate backlight visual inspection mechanism C, and the inner electrode plate front side visual inspection mechanism D. The inner electrode plate reverse side visual inspection mechanism B means that the inner electrode plate image acquisition apparatus and the inner electrode plate inspection light source corresponding to the station are both located on the reverse side of the inner electrode plate, and are configured to collect electrode plate defect information on the reverse side of the electrode plate. The inner electrode plate backlight visual inspection mechanism C means that the inner electrode plate image acquisition apparatus and the inner electrode plate inspection light source corresponding to the station are located on both sides of the inner electrode plate, and this mechanism is configured to determine the electrode plate defect information of the electrode plate through the light signal penetrating the plane where the electrode plate is located under backlight conditions. The inner electrode plate front side visual inspection mechanism D means that the inner electrode plate image acquisition apparatus and the inner electrode plate inspection light source corresponding to the station are both located on the front side of the inner electrode plate, and this mechanism is configured to acquire electrode plate defect information on the front side of the electrode plate.

Referring to FIG. 5, it is assumed that an inner electrode plate reverse side visual inspection mechanism B, an inner electrode plate backlight visual inspection mechanism C, and an inner electrode plate front side visual inspection mechanism D are provided on the transport path of the inner electrode plate. An inner electrode plate reverse side image acquisition apparatus 25 and an inner electrode plate reverse side light source 26 are provided on the inner electrode plate reverse side visual inspection mechanism B; an inner electrode plate backlight image acquisition apparatus 27 and an inner electrode plate backlight light source 28 are provided on the inner electrode plate backlight visual inspection mechanism C; and an inner electrode plate front side image acquisition apparatus 29 and an inner electrode plate front side light source 30 are provided on the inner electrode plate front side visual inspection mechanism D. After the inner electrode plate is processed in a tab forming region A, it is transported to an inner side and an outer side by the transportation apparatus. The electrode plate on an inner transport path needs to pass through the inner electrode plate reverse side visual inspection mechanism B, the inner electrode plate backlight visual inspection mechanism C, and the inner electrode plate front side visual inspection mechanism D sequentially, such that the first electrode plate defect information is acquired.

Through image acquisition under front side, reverse side, and backlight conditions, the system can obtain a very comprehensive view of the electrode plate. Even if there are problems with the image acquisition conditions on one or even both sides of the electrode plate, the system can still accurately complete the acquisition of the first electrode plate defect information, which enhances the adaptability of the system while improving the stability of the inspection process. Relying solely on a single method for image acquisition will result in the omission of a large amount of defect information. For example, if only a combination of a front side light source and an image acquisition apparatus is used for image acquisition, defects on the back and inside cannot be inspected. Therefore, the most comprehensive defect inspection can be completed by the inner electrode plate reverse side visual inspection mechanism B, the inner electrode plate backlight visual inspection mechanism C, and the inner electrode plate front side visual inspection mechanism D.

The defect information generally includes the information of electrode plate defects such as burrs, cracks, and missing corners. Therefore, inspection from only one direction fails to achieve comprehensive inspection. The defects on the reverse and front sides can be effectively inspected by the reverse side image and the front side image, and the defects inside the electrode plate can be determined by the backlight image, thereby comprehensively inspecting the defects of the electrode plate and improving the comprehensiveness of the defects inspection of the first electrode plate.

In some embodiments, the outer electrode plate inspection mechanism 1005 includes an outer electrode plate reverse side visual inspection mechanism E, an outer electrode plate backlight visual inspection mechanism F, and an outer electrode plate front side visual inspection mechanism H. The determining the second electrode plate defect information of the outer electrode plate according to the second image information includes: determining a reverse side image of the outer electrode plate, a backlight image of the outer electrode plate, and a front side image of the outer electrode plate according to the second image information; determining a reverse side defect condition of the outer electrode plate according to the reverse side image of the outer electrode plate; determining a front side defect condition of the outer electrode plate according to the front side image of the outer electrode plate; determining an internal defect condition of the outer electrode plate according to the backlight image of the outer electrode plate; determining the second electrode plate defect information of the outer electrode plate according to the front side defect condition, the reverse side defect condition, and the internal defect condition.

Specifically, for the arrangement of a plurality of inspection mechanisms, this embodiment proposes the following preferred solution: an outer electrode plate reverse side visual inspection mechanism E, an outer electrode plate backlight visual inspection mechanism F, and an outer electrode plate front side visual inspection mechanism H. The outer electrode plate reverse side visual inspection mechanism E means that the outer electrode plate image acquisition apparatus and the outer electrode plate inspection light source corresponding to the station are both located on the reverse side of the outer electrode plate, and this mechanism is configured to acquire electrode plate defect information on the reverse side of the electrode plate. The outer electrode plate backlight visual inspection mechanism F means that the outer electrode plate image acquisition apparatus and the outer electrode plate inspection light source corresponding to the station are located on both sides of the outer electrode plate, and this mechanism is configured to determine the electrode plate defect information of the electrode plate through the light signal penetrating the plane where the electrode plate is located under backlight conditions. The outer electrode plate front side visual inspection mechanism H means that the outer electrode plate image acquisition apparatus and the outer electrode plate inspection light source corresponding to the station are both located on the front side of the outer electrode plate, and this mechanism is configured to acquire electrode plate defect information on the front side of the electrode plate.

Referring to FIG. 5, it is assumed that an outer electrode plate reverse side visual inspection mechanism E, an outer electrode plate backlight visual inspection mechanism F, and an outer electrode plate front side visual inspection mechanism H are provided on the transport path of the outer electrode plate. An outer electrode plate reverse side image acquisition apparatus 31 and an outer electrode plate reverse side light source 32 are provided on the outer electrode plate reverse side visual inspection mechanism E; an outer electrode plate backlight image acquisition apparatus 33 and an outer electrode plate backlight light source 34 are provided on the outer electrode plate backlight visual inspection mechanism F; and an outer electrode plate front side image acquisition apparatus 35 and an outer electrode plate front side light source 36 are provided on the outer electrode plate front side visual inspection mechanism H. After the outer electrode plate is processed in a tab forming region A, it is transported to an inner side and an outer side by a transport apparatus. The outer transport path needs to pass through the outer electrode plate reverse side visual inspection mechanism E, the outer electrode plate backlight visual inspection mechanism F, and the outer electrode plate front side visual inspection mechanism H sequentially, such that the second electrode plate defect information is acquired.

Through image acquisition under front side, reverse side, and backlight conditions, the system can obtain a very comprehensive view of the electrode plate. Even if there are problems with the image acquisition conditions on one or even both sides of the electrode plate, the system can still accurately complete the acquisition of the second electrode plate defect information, which enhances the adaptability of the system while improving the stability of the inspection process.

Through image acquisition under front side, reverse side, and backlight conditions, the system can obtain a very comprehensive view of the electrode plate. Even if there are problems with the image acquisition conditions on one or even both sides of the electrode plate, the system can still accurately complete the acquisition of the second electrode plate defect information, which enhances the adaptability of the system while improving the stability of the inspection process. Relying solely on a single method for image acquisition will result in the omission of a large amount of defect information. For example, if only a combination of a front side light source and an image acquisition apparatus is used for image acquisition, defects on the back and inside cannot be inspected. Therefore, the most comprehensive defect inspection can be completed by the outer electrode plate reverse side visual inspection mechanism E, the outer electrode plate backlight visual inspection mechanism F, and the outer electrode plate front side visual inspection mechanism H.

The defect information generally includes the information of electrode plate defects such as burrs, cracks, and missing corners. Therefore, inspection from only one direction fails to achieve comprehensive inspection. The defects on the reverse and front sides can be effectively inspected by the reverse side image and the front side image, and the defects inside the electrode plate can be determined by the backlight image, thereby comprehensively inspecting the defects of the electrode plate and improving the comprehensiveness of the defects inspection of the second electrode plate.

It should be understood that the above descriptions are provided for illustrative purposes only and do not constitute any limitation on the technical solutions of the present application. In specific applications, those skilled in the art can make settings as needed, which are not limited in the present application.

In this embodiment, inspections are respectively performed on the inner and outer electrode plates by the inner inspection mechanism and the outer inspection mechanism, such that the product quality of the electrode plates is confirmed according to the electrode plate images from the two paths, thereby ensuring timely deviation correction of the tab forming process. In the one-in-two-out cutting process of the laser cutting process, that is, after die cutting the electrode plate, the electrode plate is divided into two parts, that is, the inner and outer electrode plates, for separate inspection, so as to ensure that the die-cutting width, tab height, tab spacing, and the like of the inner and outer electrode plates meet quality requirements, thereby effectively improving the yield of the die cutting stage in the one-in-two-out cutting process, and effectively screening out electrode plates with poor quality.

It should be noted that the working processes described above are merely schematic and do not limit the scope of protection of the present application. In practical applications, those skilled in the art may select part or all of these working processes according to actual needs to achieve the purpose of this embodiment, which is not limited here.

In addition, for technical details not fully described in this embodiment, reference may be made to the visual inspection method for die cutting and slitting provided in any embodiment of the present application, which will not be repeated here.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A die cutting and slitting system, wherein the system comprises an inner electrode plate inspection mechanism, an outer electrode plate inspection mechanism, a conveying apparatus, and an upper computer;
the conveying apparatus is configured to transport an inner electrode plate to pass through the inner electrode plate inspection mechanism, and the conveying apparatus is configured to transport an outer electrode plate to pass through the outer electrode plate inspection mechanism;
the inner electrode plate inspection mechanism is configured to acquire first image information;
the outer electrode plate inspection mechanism is configured to acquire second image information;
the upper computer is configured to perform quality inspection according to the first image information and the second image information.

2. The system according to claim 1, wherein the upper computer is further configured to complete deviation correction of electrode plate die cutting according to an inspection result of the quality inspection.

3. The system according to claim 1, wherein the system further comprises an electrode plate processing mechanism;
the electrode plate processing mechanism is configured to process an electrode plate into an inner electrode plate and an outer electrode plate, and the inner electrode plate and the outer electrode plate are transported by the conveying apparatus;
the upper computer is further configured to determine an image inspection result according to the first image information and the second image information, and send the image inspection result to the electrode plate processing mechanism;
the electrode plate processing mechanism is configured to adjust the inner electrode plate and/or the outer electrode plate according to the image inspection result.

4. The system according to claim 1, wherein the inner electrode plate inspection mechanism comprises one or more of an inner electrode plate reverse side visual inspection mechanism, an inner electrode plate backlight visual inspection mechanism, and an inner electrode plate front side visual inspection mechanism;
the inner electrode plate reverse side visual inspection mechanism is configured to inspect a reverse side image of the inner electrode plate;
the inner electrode plate backlight visual inspection mechanism is configured to inspect a backlight image of the inner electrode plate;
the inner electrode plate front side visual inspection mechanism is configured to inspect a front side image of the inner electrode plate;
the upper computer is further configured to determine the first image information according to one or more of the reverse side image of the inner electrode plate, the backlight image of the inner electrode plate, and the front side image of the inner electrode plate.

5. The system according to claim 1, wherein the outer electrode plate inspection mechanism comprises one or more of an outer electrode plate reverse side visual inspection mechanism, an outer electrode plate backlight visual inspection mechanism, and an outer electrode plate front side visual inspection mechanism;
the outer electrode plate reverse side visual inspection mechanism is configured to inspect a reverse side image of the outer electrode plate;
the outer electrode plate backlight visual inspection mechanism is configured to inspect a backlight image of the outer electrode plate;
the outer electrode plate front side visual inspection mechanism is configured to inspect a front side image of the outer electrode plate;
the upper computer is further configured to determine the second image information according to one or more of the reverse side image of the outer electrode plate, the backlight image of the outer electrode plate, and the front side image of the outer electrode plate.

6. The system according to claim 4, wherein the inner electrode plate inspection mechanism comprises an inner electrode plate reverse side visual inspection mechanism;
the inner electrode plate reverse side visual inspection mechanism comprises a first inner electrode plate image acquisition apparatus and a first inner electrode plate inspection light source;
the first inner electrode plate image acquisition apparatus directly faces a reverse side of the inner electrode plate, and the first inner electrode plate inspection light source directly faces the reverse side of the inner electrode plate;
the inner electrode plate reverse side visual inspection mechanism is configured to inspect a reverse side image of the inner electrode plate.

7. The system according to claim 4, wherein the inner electrode plate inspection mechanism comprises an inner electrode plate backlight visual inspection mechanism;
the inner electrode plate backlight visual inspection mechanism comprises a second inner electrode plate image acquisition apparatus and a second inner electrode plate inspection light source;
the second inner electrode plate image acquisition apparatus directly faces a front side of the inner electrode plate, and the second inner electrode plate inspection light source directly faces a reverse side of the inner electrode plate;
the inner electrode plate backlight visual inspection mechanism is configured to inspect a backlight image of the inner electrode plate.

8. The system according to claim 4, wherein the inner electrode plate inspection mechanism comprises an inner electrode plate front side visual inspection mechanism;
the inner electrode plate front side visual inspection mechanism comprises a third inner electrode plate image acquisition apparatus and a third inner electrode plate inspection light source;
the third inner electrode plate image acquisition apparatus directly faces a front side of the inner electrode plate, and the third inner electrode plate inspection light source directly faces the front side of the inner electrode plate;
the inner electrode plate front side visual inspection mechanism is configured to inspect a front side image of the inner electrode plate.

9. The system according to claim 5, wherein the outer electrode plate inspection mechanism comprises an outer electrode plate reverse side visual inspection mechanism;
the outer electrode plate reverse side visual inspection mechanism comprises a first outer electrode plate image acquisition apparatus and a first outer electrode plate inspection light source;
the first outer electrode plate image acquisition apparatus directly faces a reverse side of the outer electrode plate, and the first outer electrode plate inspection light source directly faces the reverse side of the outer electrode plate;
the outer electrode plate reverse side visual inspection mechanism is configured to inspect a reverse side image of the outer electrode plate.

10. The system according to claim 5, wherein the outer electrode plate inspection mechanism comprises an outer electrode plate backlight visual inspection mechanism;
the outer electrode plate backlight visual inspection mechanism comprises a second outer electrode plate image acquisition apparatus and a second outer electrode plate inspection light source;
the second outer electrode plate image acquisition apparatus directly faces a front side of the outer electrode plate, and the second outer electrode plate inspection light source directly faces a reverse side of the outer electrode plate;
the outer electrode plate backlight visual inspection mechanism is configured to inspect a backlight image of the outer electrode plate.

11. The system according to claim 5, wherein the outer electrode plate inspection mechanism comprises an outer electrode plate front side visual inspection mechanism;
the outer electrode plate front side visual inspection mechanism comprises a third outer electrode plate image acquisition apparatus and a third outer electrode plate inspection light source;
the third outer electrode plate image acquisition apparatus directly faces a front side of the outer electrode plate, and the third outer electrode plate inspection light source directly faces the front side of the outer electrode plate;
the outer electrode plate front side visual inspection mechanism is configured to inspect a front side image of the outer electrode plate.

12. A control system for a die cutting and slitting system, wherein the system comprises an inner electrode plate inspection mechanism, an outer electrode plate inspection mechanism, an upper computer, and a conveying apparatus;
controls the conveying apparatus to transport an inner electrode plate to pass through the inner electrode plate inspection mechanism;
controls the conveying apparatus to transport an outer electrode plate to pass through the outer electrode plate inspection mechanism;
controls the inner electrode plate inspection mechanism to acquire first image information of the inner electrode plate;
controls the outer electrode plate inspection mechanism to acquire second image information of the outer electrode plate;
sends the first image information and the second image information to the upper computer, such that the upper computer performs quality inspection according to the first image information and the second image information, to obtain an inspection result.

13. The system according to claim 12, wherein the control system for the die cutting and slitting system further comprises an electrode plate processing mechanism;
acquires the inspection result sent by the upper computer;
controls the electrode plate processing mechanism to perform electrode plate processing according to the inspection result.

14. A visual inspection method for die cutting and slitting, wherein the method is applied to a die cutting and slitting system, and the system comprises an inner electrode plate inspection mechanism, an outer electrode plate inspection mechanism, a conveying apparatus, and an upper computer; the conveying apparatus transports an inner electrode plate to pass through the inner electrode plate inspection mechanism, and the conveying apparatus transports an outer electrode plate to pass through the outer electrode plate inspection mechanism;
the visual inspection method for die cutting and slitting comprises:
the upper computer being configured to acquire first image information and second image information;
performing quality inspection according to the first image information and the second image information, wherein the first image information is an image acquired by the inner electrode plate inspection mechanism, and the second image information is an image acquired by the outer electrode plate inspection mechanism.

15. The method according to claim 14, wherein the die cutting and slitting system further comprises an electrode plate processing mechanism, and the electrode plate processing mechanism is configured to process the inner electrode plate and the outer electrode plate;
the performing quality inspection according to the first image information and the second image information further comprises:
determining first electrode plate dimension information of the inner electrode plate according to the first image information, and determining second electrode plate dimension information of the outer electrode plate according to the second image information;
after the performing quality inspection according to the first image information and the second image information, the method further comprises:
adjusting the electrode plate processing mechanism according to the first electrode plate dimension information and/or the second electrode plate dimension information.

16. The method according to claim 15, wherein the determining the first electrode plate dimension information of the inner electrode plate according to the first image information comprises: determining a backlight image of the inner electrode plate according to the first image information; and determining an electrode width of the inner electrode plate according to a backlight image of the inner electrode plate.

17. The method according to claim 16, wherein a plurality of the inner electrode plate inspection mechanisms are provided, the inner electrode plate inspection mechanisms each comprise an inner electrode plate image acquisition apparatus and an inner electrode plate inspection light source, and relative positions of the inner electrode plate image acquisition apparatus and the inner electrode plate inspection light source in each of the inner electrode plate inspection mechanisms to the inner electrode plate are different;
the determining the first electrode plate dimension information of the inner electrode plate according to the first image information comprises:
determining the first electrode plate dimension information of the inner electrode plate according to the first image information corresponding to each of the inner electrode plate inspection mechanisms.

18. The method according to claim 16, wherein a plurality of the outer electrode plate inspection mechanisms are provided, the outer electrode plate inspection mechanisms each comprise an outer electrode plate image acquisition apparatus and an outer electrode plate inspection light source, and relative positions of the outer electrode plate image acquisition apparatus and the outer electrode plate inspection light source in each of the outer electrode plate inspection mechanisms to the outer electrode plate are different;
the determining the second electrode plate dimension information of the outer electrode plate according to the second image information comprises:
determining the second electrode plate dimension information of the outer electrode plate according to the second image information corresponding to each of the outer electrode plate inspection mechanisms.

19. The method according to claim 16, wherein the inner electrode plate inspection mechanism comprises one or more of an inner electrode plate reverse side visual inspection mechanism, an inner electrode plate backlight visual inspection mechanism, and an inner electrode plate front side visual inspection mechanism; the inner electrode plate reverse side visual inspection mechanism is configured to inspect a reverse side image of the inner electrode plate; the inner electrode plate backlight visual inspection mechanism is configured to inspect a backlight image of the inner electrode plate; the inner electrode plate front side visual inspection mechanism is configured to inspect a front side image of the inner electrode plate;
the determining the first electrode plate dimension information of the inner electrode plate according to the first image information comprises:
determining the first electrode plate dimension information of the inner electrode plate according to one or more of the reverse side image of the inner electrode plate, the backlight image of the inner electrode plate, and the front side image of the inner electrode plate.

20. The method according to claim 16, wherein the outer electrode plate inspection mechanism comprises one or more of an outer electrode plate reverse side visual inspection mechanism, an outer electrode plate backlight visual inspection mechanism, and an outer electrode plate front side visual inspection mechanism; the outer electrode plate reverse side visual inspection mechanism is configured to inspect a reverse side image of the outer electrode plate; the outer electrode plate backlight visual inspection mechanism is configured to inspect a backlight image of the outer electrode plate; the outer electrode plate front side visual inspection mechanism is configured to inspect a front side image of the outer electrode plate;
the determining the second electrode plate dimension information of the outer electrode plate according to the second image information comprises:
determining the second electrode plate dimension information of the outer electrode plate according to one or more of the reverse side image of the outer electrode plate, the backlight image of the outer electrode plate, and the front side image of the outer electrode plate.

21. The method according to claim 19, wherein the determining the first electrode plate dimension information of the inner electrode plate according to the first image information comprises:
determining an electrode width of the inner electrode plate according to the first image information;
comparing the electrode width of the inner electrode plate with a preset standard electrode width interval to determine the first electrode plate dimension information.

22. The method according to claim 21, wherein the determining the electrode width of the inner electrode plate according to the first image information comprises:
determining a plurality of sampled image frames according to the first image information;
determining an electrode width corresponding to each of the sampled image frames according to each of the sampled image frames;
determining the electrode width of the inner electrode plate according to the electrode width corresponding to each of the sampled image frames.

23. The method according to claim 22, wherein the determining the electrode width corresponding to each of the sampled image frames according to each of the sampled image frames comprises:
determining a plurality of sampling points according to the sampled image frames;
determining a sampling electrode width value corresponding to each of the sampling points according to the sampled image frames;
determining the electrode widths corresponding to the sampled image frames according to each of the sampling electrode width values.

24. The method according to claim 21, wherein the determining the electrode width of the inner electrode plate according to the first image information comprises:
determining a backlight image of the inner electrode plate according to the first image information;
determining the electrode width of the inner electrode plate according to the backlight image of the inner electrode plate.

25. The method according to claim 19, wherein the die cutting and slitting system further comprises a first marking apparatus and a second marking apparatus;
controls, when the first electrode plate dimension information does not meet a first preset dimension information, the first marking apparatus to mark the inner electrode plate; and
controls, when the second electrode plate dimension information does not meet a second preset dimension information, the second marking apparatus to mark the outer electrode plate.

26. The method according to claim 15, wherein the performing quality inspection according to the first image information and the second image information further comprises:
determining first electrode plate defect information of the inner electrode plate according to the first image information;
determining second electrode plate defect information of the outer electrode plate according to the second image information;
generating alarm information when the first electrode plate defect information indicates that a defect is present or the second electrode plate defect information indicates that a defect is present.

27. The method according to claim 26, wherein the inner electrode plate inspection mechanism comprises an inner electrode plate reverse side visual inspection mechanism, an inner electrode plate backlight visual inspection mechanism, and an inner electrode plate front side visual inspection mechanism;
the determining the first electrode plate defect information of the inner electrode plate according to the first image information comprises:
determining a reverse side image of the inner electrode plate, a backlight image of the inner electrode plate, and a front side image of the inner electrode plate according to the first image information;
determining a reverse side defect condition of the inner electrode plate according to the reverse side image of the inner electrode plate;
determining a front side defect condition of the inner electrode plate according to the front side image of the inner electrode plate;
determining an internal defect condition of the inner electrode plate according to the backlight image of the inner electrode plate;
determining the first electrode plate defect information of the inner electrode plate according to the front side defect condition, the reverse side defect condition, and the internal defect condition.

28. The method according to claim 26, wherein the outer electrode plate inspection mechanism comprises an outer electrode plate reverse side visual inspection mechanism, an outer electrode plate backlight visual inspection mechanism, and an outer electrode plate front side visual inspection mechanism;
the determining the second electrode plate defect information of the outer electrode plate according to the second image information comprises:
determining a reverse side image of the outer electrode plate, a backlight image of the outer electrode plate, and a front side image of the outer electrode plate according to the second image information;
determining a reverse side defect condition of the outer electrode plate according to the reverse side image of the outer electrode plate;
determining a front side defect condition of the outer electrode plate according to the front side image of the outer electrode plate;
determining an internal defect condition of the outer electrode plate according to the backlight image of the outer electrode plate;
determining the second electrode plate defect information of the outer electrode plate according to the front side defect condition, the reverse side defect condition, and the internal defect condition.
